(19) **Europäisches Patentamt / European Patent Office / Office européen des brevets**

(11) **EP 3 669 469 B1**

(12) # EUROPEAN PATENT SPECIFICATION

(45) Date of publication and mention of the grant of the patent:
**30.04.2025 Bulletin 2025/18**

(21) Application number: **18750471.7**

(22) Date of filing: **14.08.2018**

(51) International Patent Classification (IPC):
$H04L\ 5/14^{(2006.01)}$    $H04L\ 25/02^{(2006.01)}$
$H04L\ 27/00^{(2006.01)}$    $H04L\ 27/26^{(2006.01)}$
$H04B\ 10/11^{(2013.01)}$    $H04B\ 10/116^{(2013.01)}$
$H04L\ 5/00^{(2006.01)}$    $H04L\ 27/04^{(2006.01)}$

(52) Cooperative Patent Classification (CPC):
**H04B 10/116; H04B 10/11; H04L 5/0026; H04L 5/0048; H04L 5/0091; H04L 25/02; H04L 27/0008; H04L 27/04; H04L 27/2697; H04L 5/0035; H04L 5/14**

(86) International application number:
**PCT/EP2018/072076**

(87) International publication number:
**WO 2019/034672 (21.02.2019 Gazette 2019/08)**

(54) **WIRELESS NETWORK AND DEVICES**

DRAHTLOSES NETZWERK UND VORRICHTUNGEN

RÉSEAU ET DISPOSITIFS SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.08.2017 EP 17186340
07.01.2018 EP 18150523
16.01.2018 EP 18151869
18.06.2018 EP 18178372**

(43) Date of publication of application:
**24.06.2020 Bulletin 2020/26**

(73) Proprietor: **Fraunhofer-Gesellschaft zur Förderung
der angewandten Forschung e.V.
80686 München (DE)**

(72) Inventors:
• **JUNGNICKEL, Volker**
  **1058z Berlin (DE)**
• **HILT, Jonas**
  **10587 Berlin (DE)**
• **BOBER, Kai, Lennert**
  **10587 Berlin (DE)**
• **HINRICHS, Malte**
  **10587 Berlin (DE)**
• **WILKE-BERENGUER, Pablo**
  **10587 Berlin (DE)**
• **SCHULZ, Dominic**
  **10587 Berlin (DE)**
• **PARASKEVOPOULOS, Anagnostis**
  **10587 Berlin (DE)**

(74) Representative: **Burger, Markus et al
Schoppe, Zimmermann, Stöckeler
Zinkler, Schenk & Partner mbB
Patentanwälte
Radlkoferstraße 2
81373 München (DE)**

(56) References cited:
**US-A1- 2007 153 743    US-A1- 2011 217 044**

**(Cont. next page)**

- **NOSHAD MOHAMMAD ET AL: "Hadamard-Coded Modulation for Visible Light Communications", IEEE TRANSACTIONS ON COMMUNICATIONS, IEEE SERVICE CENTER, PISCATAWAY, NJ. USA, vol. 64, no. 3, 1 March 2016 (2016-03-01), pages 1167 - 1175, XP011603087, ISSN: 0090-6778, [retrieved on 20160315], DOI: 10.1109/ TCOMM.2016.2520471**

**EP 3 669 469 B1**

**Description**

1.1 Background

Examples and aspects herein below relate to strategies and techniques for wireless networks, devices and/or commutations, e.g., for visible light communication, VLC.

Wireless communications (and in particular VLS communications) permit the exchange of transmissions between transmitters and receivers without interposition of electrical wires.

Wireless communications suffer of several impairments, such as a reduced reliability as it is not possible to always guarantee that transmissions are properly received by the receiver. Further, there is the necessity of establishing rules (e.g., protocols) for coordinating the transmissions and the receptions.

For example, it is necessary to establish rules for avoiding that two nodes of the network transmit simultaneously or, in case of this occurrence, to develop techniques for solving collisions.

Moreover, it may be necessary for the receiver to determine the characteristics of the channel. For this purpose, pilot sequences may be transmitted from a receiver so that a receiver can determine the channel characteristics.

In some cases, multiple nodes transmit their pilot sequences at the same time,

US 2007/153743 A1 discloses a radio frequency device which is not an optical communication device.

US 2011/0217044 discloses an access point of a visible light multiplex communication system. According to a particular example of the access point, it is divided between a transmitter unit and a receiving unit. Modulators are part of the transmitting unit. A first modulator is associated to identification information. Further modulators are associated to data information. All the modulators are upstream to a multiplexer, which is associated to one single light-emitting unit. The identification information is multiplexed so as to be allocated to a time slot separated from the slot in which the data information is transmitted.

Noshad Mohammad et al., "Hadamard-Coded Modulation for Visible Light Communications", IEEE TRANSACTIONS ON COMMUNICATIONS, IEEE SERVICE CENTER, PISCATAWY, NJ. USA, vol. 64, no. 3, 1 March 2016, pages 1167-117, teaches the use of Hadamard codes for visible light communication teaches the use of Hadamard codes for visible light communication.

1.2 Summary

The invention is defined in the independent claims.

In accordance to an aspect, there is provided a communication device for communicating with a plurality of other communication devices, using a wireless link, wherein the communication device is an optical communication device, wherein the communication device is configured to:

provide individual reference signals using a number of subcarriers ($S_1$-$S_8$) or time slots in accordance to:

the optical clock reference which is a clock reference selected among a collection of predefined optical clock references, so that the faster the optical clock reference, the more subcarriers; and

the number of transmitting communication devices in a set of transmitting communication devices or streams to be transmitted in parallel, so that the more communication devices, the more space between the subcarriers;

shift the position of subcarriers or of signals at the time slots by a number of positions which is derived by an identification number associated to an individual communication device within the whole set of transmitting communication devices or in dependence on an identification number identifying a specific stream or transmitter;

transmit the reference signal which enables the plurality of receiving communication devices to identify the reference signal coming from the individual communication device in the whole set of communication devices or being associated with a specific stream or transmitter.

In accordance to an aspect, the at least one reference signal is configured so that

a header includes a specific analog waveform associated with the device or a data stream or a transmitter while the rest of the header is transmitted using a common modulation format shared between different devices,

wherein the device is configured to transmit different specific analog waveforms using different transmitters.

In accordance to an aspect, it is configured to select a specific waveform out of a plurality of waveforms which are orthogonal in a time domain, and transmit the specific analog waveform associated with a data stream or a transmitter.

In accordance to an aspect, it is configured to select a sequence out of a plurality of sets of mutually orthogonal sequences in dependence on an index (i) identifying a specific device or a specific data stream or a specific transmitter and to derive the specific analog waveform from the selected row or column of a Hadamard matrix.

In accordance to an aspect, the set of mutually orthogonal sequences is associated to a Hadamard Matrix, wherein the Hadamard Matrix is defined as

$$\mathbf{H}_0 = \begin{bmatrix} 1 \end{bmatrix} \; ; \; \mathbf{H}_k = \begin{bmatrix} \mathbf{H}_{k-1} & \mathbf{H}_{k-1} \\ \mathbf{H}_{k-1} & -\mathbf{H}_{k-1} \end{bmatrix}.$$

In accordance to an aspect, it is configured to reduce a DC component in the selected row or column when deriving the device-specific analog waveform from the selected row or column and/or combine the selected row or column with a base sequence when deriving the specific analog waveform from the selected row or column.

In accordance to an aspect, it is configured to obtain a time-domain signal which is orthogonal in the time domain to a time domain signal provided by another device or to a time domain signal associated with a different index.

In accordance to an aspect, it is configured to select specific waveform out of a plurality of waveforms which are orthogonal in a frequency domain.

In accordance to an aspect, it is configured to select a pseudo noise sequence in dependence on the optical clock reference and the number of communication devices and/or transmitters and/or streams, and derive a set of spectral values from the selected pseudo noise sequence in order to derive the specific waveform from the optical clock reference and/or the number of transmitting communication devices in the set or streams to be transmitted in parallel.

In accordance to an aspect, it is configured to add a bias value to the sequence, to bring an average value closer to 0, and/or insert zero values into the sequence in dependence on the information about number of transmitting communication devices in the set or streams to be transmitted in parallel and/or cyclically shift applied to up-sampled sequence, to adjust positions of non-zero values in a shifted version of the sequence in dependence on the identification number.

In accordance to an aspect, it is configured to:

obtain, from a sequence of spectral values by concatenating the up-sampled and cyclically shifted sequence and/or a reversed version thereof, a sequence of spectral values to be used to derive the specific analog waveform and perform an IFFT to derive the specific analog waveform.

In accordance with an aspect, the number of transmitting communication devices in the set of transmitting communication devices or streams to be transmitted in parallel is associated to a comb factor ($\Delta$) which defines the relative positions between the subcarriers.

In accordance with an aspect, the communication device is a visible light communication, VLC, device and/or comprising at least one photodiode or a laser diode to transmit wireless signals.

In accordance with an aspect, there is provided method for performing a communication for communicating with a plurality of other communication devices, using an optical wireless link, comprising:

providing individual reference signals using a number of subcarriers or time slots in accordance to:

an optical clock reference, which is a clock reference selected among a collection of predefined optical clock references, so that the faster the optical clock reference, the more subcarriers; and

the number of transmitting communication devices in the set of communication devices or streams to be transmitted in parallel, so that the more communication devices, the more space between the subcarriers;

shifting the position of subcarriers or of signals at the time slots by a number of positions which is derived from an identification number associated to an individual communication device within the whole set of transmitting communication devices or in dependence on an identification number identifying a specific stream or transmitter;

transmitting the reference signal which enables the plurality of receiving communication devices to identify the reference signal coming from the individual communication device in the whole set of communication devices or being associated with a specific stream or transmitter.

In accordance with an aspect, there is provide a non-transitory memory unit which stores instruction which, when executed by a processor, cause the processor to perform a computer-implemented method for performing a communication for communicating with a plurality of other communication devices, using an optical wireless link, the computer-implemented method comprising:

providing individual reference signals using a number of subcarriers or time slots in accordance to:

an optical clock reference, which is a clock reference selected among a collection of predefined optical clock references, so that the faster the optical clock reference, the more subcarriers; and

the number of transmitting communication devices in the set of communication devices or streams to be transmitted in parallel, so that the more communication devices, the more space between the subcarriers;

shifting the position of subcarriers or of signals at the time slots by a number of positions which is derived from an identification number associated to an individual communication device within the whole set of transmitting communication devices or in dependence on an identification number identifying a specific stream or transmitter;

controlling the transmission of the reference signal which enables the plurality of receiving communication devices to identify the reference signal coming from the individual communication device in the whole set of communication devices or being associated with a specific stream or transmitter.

## 1.3 Figures

Figs. 1.1 and 1.2 show communication devices according to examples.
Fig. 1.3 shows a communication detail according to an example.
Figs. 1.4 and 1.4a show components of communication devices according to examples.
Fig. 1.5 shows a method according to an example.
Fig. 1.6 shows a graph of a function according to an example.
Fig. 2.1 shows a network according to an example.
Figs. 2.2 and 2.3 shows connectivity matrixes according to examples.
Figs. 2.4 and 2.5 show frames exchanged in examples of communication.
Figs. 2.6, 2.8 and 2.9 show examples of communication.
Fig. 2.7 shows wireless resources for a communication.
Fig. 3.1 shows a frame exchanged in an example of communication.
Figs. 3.2 and 3.3 show block schemes for transmissions according to examples.
Fig. 3.4 shows an encoder and a decoder according to an example.

## 1.4 Examples

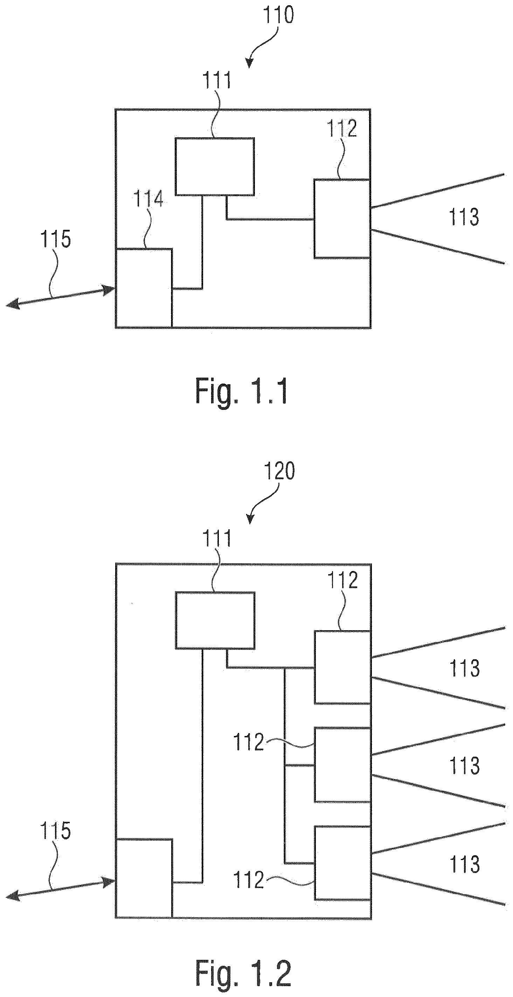

Fig. 1.1 shows a communication device 110. The communication device 110 may be a communication device for optical communication, for example, such as visible light communication, VLC. The communication device 110 may comprise a processor 111 for controlling the communication and processing signals. The communication device 111 may comprise or be connected with at least one transmitter/receiver 112, which may be, for example, an emitter of the type including light emitting diode(s), LED(s) for transmissions, and/or phototransistors for receptions. The transmitter/receiver 112 transmits/receives wireless signals 113 with other external communication devices. The communication device 110 may comprise an input/output, I/O, unit 114, which may transmit/receive signals 115 (e.g., electric signals or radio frequency, RF, signals) with external devices. In examples, the communication device 110 may be a device positioned in a fixed place (e.g., engaged to a wall, or the like), or may be a mobile device.

Fig. 1.2 shows a variant of the communication device 110, referred to with numeral 120. The communication device 120 comprises a plurality of transmitters/receivers 112 (branches), which transmit/receive signals 113 (e.g., optical signals), e.g., according to a multi-input/multi-output MIMO paradigm.

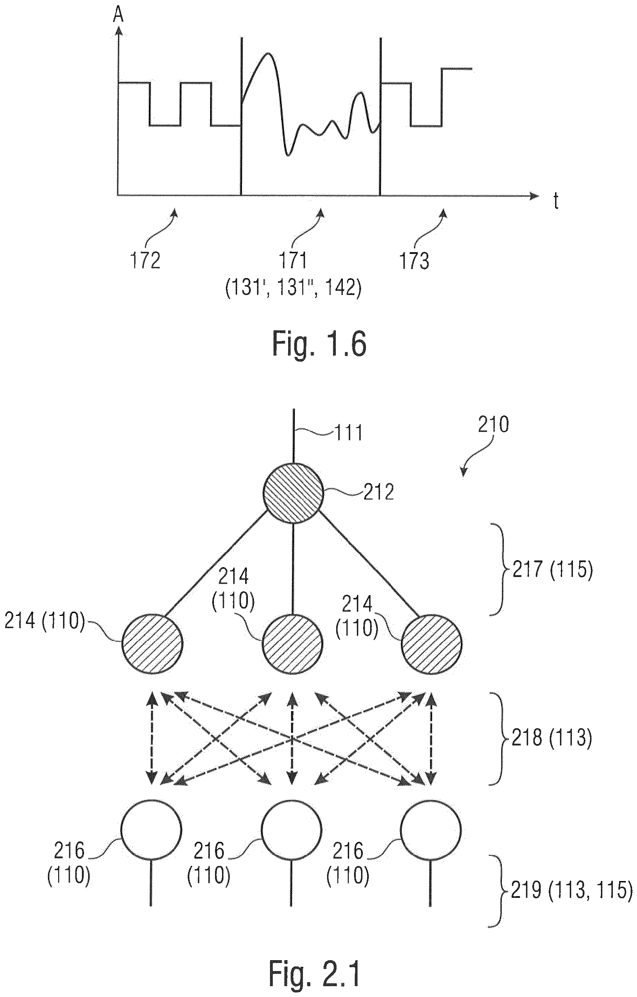

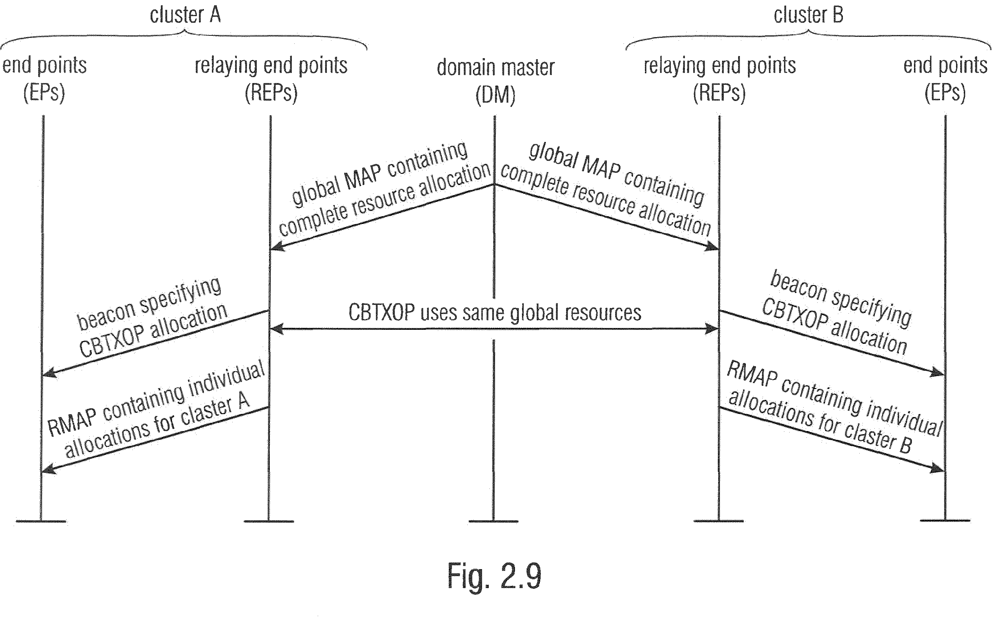

Fig. 2.1 shows a network 210 or network domain comprising a domain master, DM, 212, a plurality of relaying end points, REPs, 214 and a plurality of end points, EPs, 216.

The DM 212 may be a processor-based system, for example. It may be, for example, a local or remote or cloud-based computer system, and may be connected, through connection 111, with other devices.

Each REP 214 may be placed in a fixed position (e.g., attached to a wall in a room). The REP's position may be known by the DM 212. Each of the REPs 214 and EPs 216 may be one of the communication devices 110 or 120. In particular, the REPs 214 may exchange signals 113 (e.g., optical signals) along a second (e.g., optical) communication link 218, which may be a VLC link.

Each EP 214 may be mobile, and its position may not be known a priori by the DM 212. At least one EP 216 may, in general, communicate, via signals 219 (which may be indifferently RF signals, electric signals, optical signals, etc.), with other devices or with other units of the same device.

Other topologies may be used in other examples.

The REPs 214 are devices which essentially relay signals transmitted from the DM 212 to the EPs 216 (but in optical form), and/or vice versa. When relaying signals from the DM to the EPs (downlink, DL), each REP 214 transmits signals 113 to some of the EPs 216, e.g., those EPs which the REP 214 is capable of "seeing" (i.e., establishing a satisfactory communication).

In order to increase determinism, it is in general preferable that the DM pre-allocates (e.g., schedules) wireless resources (time slots, colors, frequency bands, etc.) to the different communications and/or devices, so as to avoid collisions between signals transmitted by two different EPs or REPs. Hence, the DM preferably defines contention-free wireless resources.

Notwithstanding, some contention-based resources are in general defined. This is because, for example, there is the possibility that a new EP intends to start a communication with the DM. An EP may move or be moved within the coverage area of the network 210, so that it is possible to initiate a communication with the REPs: hence, the EP shall signal its presence. Another possibility is that the EP is switched on during the operations of the network system and intends to communicate with the DM: the switched-on EP shall indicate its presence.

In order to permit this possibility, the DM periodically transmits a general frame (e.g., a "beacon frame") which is relayed by the totality to the REPs 214. The beacon frame specifies, encoded in some data fields, the resources in which new EPs, if present, will signal their presence. All the EPs which intends to be part of the network will therefore send a transmission in the resources indicated by the DM.

Therefore, in general, there is the necessity of permitting some contention-based resources, in which there is the risk of multiple new EPs to signalling their presence simultaneously.

It has been noted that it is possible perform a communication in which:

- a first EP transmits a first comb-like pilot sequence with a discrete number of subcarriers; and
- a second EP transmits a second comb-like pilot sequence with a discrete number of subcarriers.

The subcarriers of second first comb-like pilot sequence are shifted with respect to the subcarriers of the first comb-like pilot sequence, so as to permit at least one REP to determine metrics associated to the VLC link 218 with respect to each of the first and second EPs.

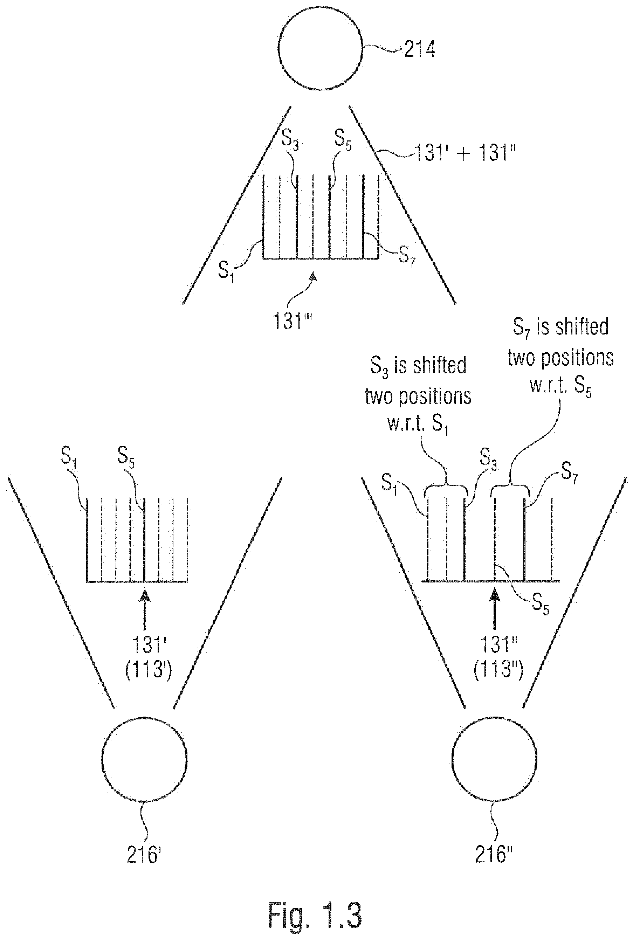

An example is provided in Fig. 1.3. In the contention-based wireless resource signalled in the beacon frame, two different EPs 216' and 216" try to simultaneously communicate with the DM by sending wireless transmissions 113' and 113" to a REP 214. Both transmissions 113' and 113" are comb-like pilot sequences respectively indicated as 131' and 131" with a discrete number of subcarriers, which are numbered as $S_1...S_8$ (here, eight subcarriers are shown, but other numbers may be used). The first comb-like pilot sequence 131' only comprises the subcarriers $S_1$ and $S_5$, while the second comb-like pilot sequence 131" only comprises the subcarriers $S_3$ and $S_7$. Notably, the subcarriers of the second sequence 131" are shifted of two positions with respect to the subcarriers $S_1$ and $S_5$ of the first sequence 131'. (Other shifts may be provided: for example, in case of shifting of three positions, the second sequence 131" would present the subcarriers $S_4$ and $S_8$.) For each comb-like pilot sequence, the non-occupied subcarriers are void (e.g., 0 magnitude of the bin).

The composition of the sequences 131' and 131" is received as sequence 131''' by the REP 214. Therefore, the two pilot sequences 131' and 131" do not collide. From the shift positions between the sequences, it is possible for the REP and/or the DM to obtain information from both EPs 216' and 216".

In the example of Fig. 1.3, four EPs may transmit simultaneously. However, if the number of subcarriers increases, there is the possibility of deterministically accommodating more transmissions from the EPs to the REPs.

Further, from the received sequence 131''' the REP 214 may measure metrics regarding the link 218 and/or metrics relating to the quality, such as channel quality information (CQI), channel state information (CSI), and so on. The obtained metrics may be signalled to the DM 212.

The opposite process is also possible: one EP may receive comb-like pilot sequences from different REPs, so as to measure metrics associated to the link and/or the quality of the communication, and, subsequently, to signal them to the DM 212 via the REPs 214. This may occur, for example, when a "beacon frame" (see below) is transmitted from the DM to the EPs through the REPs. Accordingly, the EPs may measure metrics associated to the channel in one single measurement session.

Aspects for the generation of useful wireless signals (e.g., for individual generating reference signals and/or for other purposes), such as comb-like signals (e.g., comb-like pilot sequences), are discussed here. Optical signals (e.g., visual optical signals) are discussed. The aspects relate to the topology and/or devices discussed above and/or to other, different topologies and/or devices.

It is also possible to define a similar procedure in the time domain, TD, Time slots may substitute the subcarriers in the examples above.

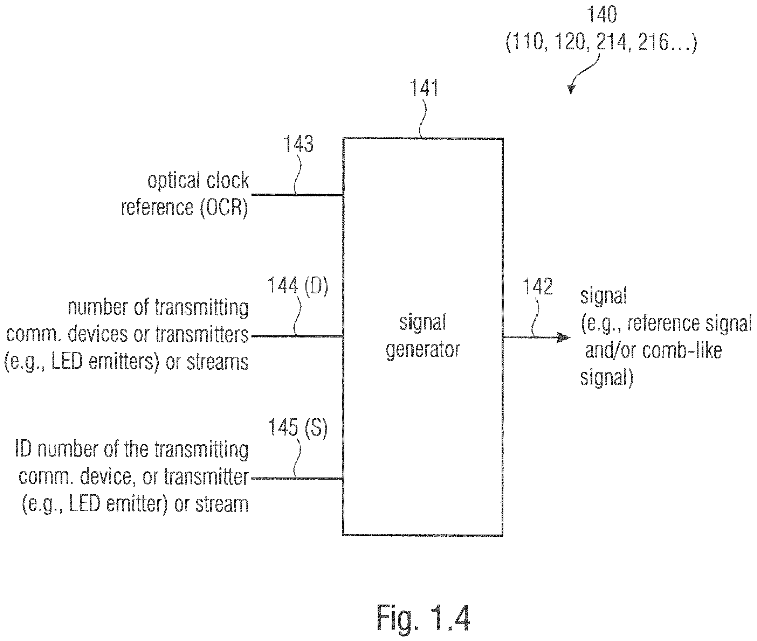

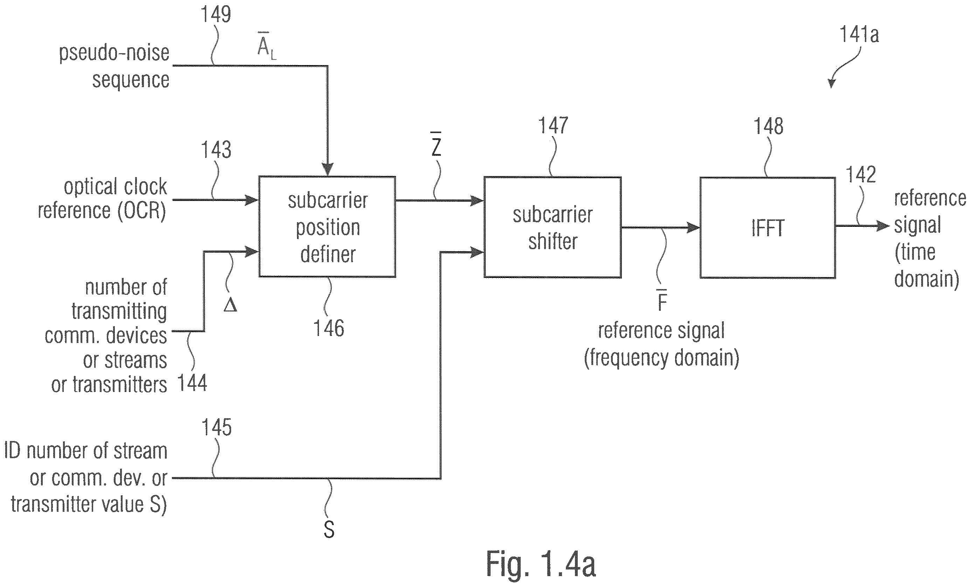

Fig. 1.4 shows an example relating to a communication device 140. In some examples, the communication device 140 one of the devices 110, 120, 214, 216. The communication device 140 comprises a signal generator 141, which is implemented in hardware and/or in programming so as to generate an output signal 142, which may be a digital or analog signal and may be described in the time domain, TD, or in frequency domain, FD. The output signal 142 is provided to an emitter (e.g., the emitter 112) and provided (e.g., as wireless signal 113) to a receiver (which may in turn be one of the 110, 120, 214, 216).

The signal generator 141 is input with at least the following information:

- information 143 regarding an optical clock reference (or rate), OCR, which may be a frequency selected among a collection of predefined OCRs, and may have a value of more than 1 MHz;
- information 144 associated to the number of transmitting communication devices in the network (e.g., three REPs + three EPs = six communication devices in Fig. 2.1) or transmitters (e.g., LED emitters 112) (e.g., three LED emitters in Fig. 1.2;) or streams to be transmitted; and
- information 145 regarding an identification number associated to the communication device (e.g., a medium access control, MAC, address) which individually identifies the communication device, or an ID number associated to the particular transmitter (e.g., LED emitter) or an identifier associated to the stream.

It has been noted that it is possible to appropriately generate reference signals and comb-like signals 142 (e.g., comb-like pilot sequences). In examples, the signals 142 may be orthogonal signals. The signals 142 are used for uniquely identifying the communication devices, transmitters (e.g., LED emitters) and/or the streams.

The signal 142 may be a comb-like signal (e.g., to be used as the comb-like pilot sequence 131' or 1.31") and presents subcarriers (e.g., $S_1$ and $S_5$ for the device 216'; and $S_3$ and $S_7$ for the device 216") which are distant from each other for a particular number of positions (e.g., four positions). The distance between subcarriers may be fixed for each comb-like signal and may be the same for all the comb-like signal in the same network.

Fig. 1.4a shows a more detailed example of a signal generator 141a, which mainly operates in the FD. The generator 141a is input with the information 143, 144, 145.

The generator 141a comprises a subcarrier position definer 146, which defines the relative positions between subcarriers of the signal 141. The subcarrier position definer 146 takes into account:

- the information 143 regarding an optical clock reference (or rate), OCR 143, which is a frequency chosen among a discrete number of OCRs, and may have a value of more that 1 MHz; and
- the information 144 associated to the number of transmitting communication devices in the network (e.g., three REPs + three EPs = six communication devices in Fig. 2.1) or transmitters (e.g., LED emitters 112) (e.g., three LED emitters in Fig. 1.2;) or streams to be transmitted.

In general terms, in a fixed-length time slot, the faster the OCR, the more subcarriers may be used for the comb-like signal. With reference to the signal comb-like pilot sequence 131, eight subcarriers $S_1....S_8$ are possible. However, by increasing the OCR, there is the possibility of having, say, sixteen subcarriers, and so on.

Another parameter that is kept into account is the number of transmitting communication devices (and/or transmitters and/or streams). The more communications devices (or transmitters, or streams) are in the network, the more space (e.g., resources allocated by the DM) is necessary, between subcarriers of the same signal, as it is necessary to leave the space for the subcarrier of the other devices.

A comb factor $\Delta$ may be defined, which keeps into account the number of other communication devices, transmitters and/or streams taking part to the network. Therefore, the comb factor $\Delta$ represents an example of information 144 associated to the number of transmitting communication devices, transmitters and/or streams in the network. In examples, up to $\Delta$-1 communication devices may participate. Additional or alternative examples of information 144 may be used.

On the basis of the OCR 143 and of information 144 (e.g., comb factor $\Delta$), the relative positions between the subcarriers of the same device (or transmitter or stream) are defined at the subcarrier position definer 146. In the comb-like structure, void positions are not occupied by any subcarrier, as they may be occupied by subcarrier of other devices, transmitters or streams. The output of the subcarrier position definer 146 may be a sequence Z in the spectral domain.

The subcarrier position definer 146 may be input by a pseudo-noise sequence $A_L$ (which may be, for example, a Gold sequence, see Annex), also indicated with 149. The larger the comb factor $\Delta$, the smaller the length of the Gold sequence. The pseudo-noise sequence $\mathbf{A}_L$ may be up-sampled by the comb factor $\Delta$ (the added positions have magnitudes 0), to obtain the output sequence Z.

The output sequence Z may therefore be provided to a subcarrier shifter 147, which shifts the subcarriers in the sequence Z. The sequence Z is shifted (e.g., rotated towards the right direction or left direction) by a number of positions S which is derived from the information 145 and regards the identification number of the communication device, transmitter or stream.

In blocks which are not shown in Fig. 1.4a, there is the possibility of forming the final sequence (e.g., by further processing the sequence) to obtain a final sequence F.

An IFFT block (or another bloc for converting an FD signal into a TD signal) may be implemented to obtain the final signal 142 to be transmitted by a LED emitter as signal 113.

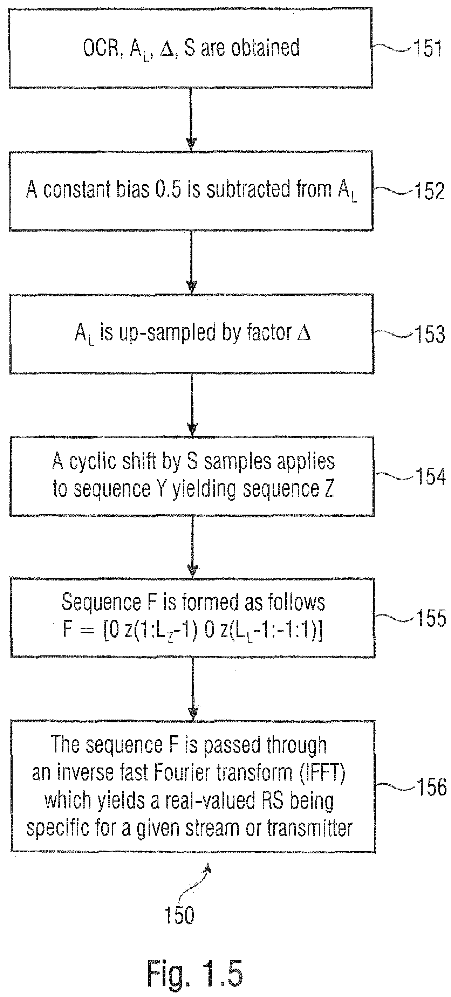

Fig. 1.5 shows a method according to an example, performed, for example, by the generator 141 or 141a for constructing a reference sequence and/or a comb-like signal.

At step 151, information regarding OCR, $A_L$, $\Delta$, S is obtained (e.g., information 143, 144, 145, 149). $A_L$ ("base sequence") is obtained by choosing L according to the following table:

| OCR/MHz | 6.25 | 12.5 | 25 | 50 | 100 | 200 |
|---|---|---|---|---|---|---|
| $N_{seq}$ | 32 | 64 | 128 | 256 | 512 | 1024 |
| $L(\Delta=1)$ | 16 | 32 | 64 | 128 | 256 | 512 |
| $L(\Delta=2)$ | 8 | 16 | 32 | 64 | 128 | 256 |
| $L(\Delta=4)$ | 4 | 8 | 16 | 32 | 64 | 128 |
| $L(\Delta=8)$ | 2 | 4 | 8 | 16 | 32 | 64 |
| $L(\Delta=16)$ | 1 | 2 | 4 | 8 | 16 | 32 |

Subsequently:

At step 152, a constant bias 0.5 is subtracted from $A_L$ (other values may be chosen).

At step 153, $A_L$ is up-sampled by comb factor $\Delta$.

At step 154 (which may be implemented by the subcarrier shifter 147), a cyclic shift by S samples applies to sequence Y yielding sequence Z. The sequence Z has length of $L_Z = L * \Delta$. The value of S identifies the specific stream or transmitter and is defined by the MAC via the PHY SAP. The MAC layer may reserve the shift $S = \Delta - 1$ for noise estimation at the receiver.

At step 155, the sequence F is formed as follows $F = [0 \ Z(1:L_Z-1) \ 0 \ Z(L_Z-1:-1:1)]$. This will implement Hermitian symmetry in the next step (in some examples, this is not necessary). Note that the first $L_Z-1$ samples from sequence Z are used twice, first in the original and then in the reversed order.

At step 156, the sequence F is passed through an inverse fast Fourier transform (IFFT) which always yields a real-valued RS being specific for a given stream or transmitter.

A discussion and additional examples of reference signals in TD are provided, for example, in section 3.1.2.2.3.2.

In examples above, different devices and/or transmitters may transmit frequency domain (FD) reference signals and/or comb-like sequences may be generated, which may be orthogonal with respect to each other.

In examples, it is also possible to generate a reference signal in the time domain, which may be orthogonal with respect to each other. For example, it is possible to generate a Hadamard matrix $H_K$ obtained iteratively by incrementing k from k=1...K as

$$\mathbf{H}_0 = \begin{bmatrix} 1 \end{bmatrix} \; ; \; \mathbf{H}_k = \begin{bmatrix} \mathbf{H}_{k-1} & \mathbf{H}_{k-1} \\ \mathbf{H}_{k-1} & -\mathbf{H}_{k-1} \end{bmatrix},$$

A discussion and additional examples of reference signals in FD are provided in particular in section 3.1.2.2.3.1.

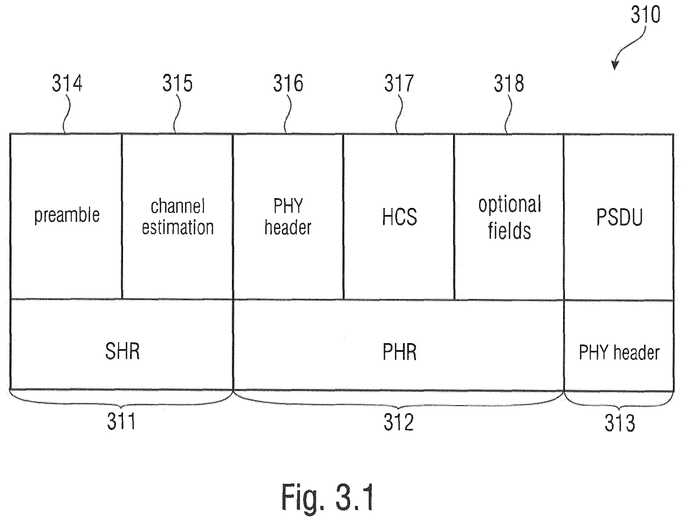

Whether the reference signal is in generated in TD or FD, it is possible to generate it and transmit as a part of an optional field in a physical header (see Fig. 3.1, numerals 312 and 318, as well as the description below). The reference signal is a specific analog waveform, which is associated to a communication device or a transmitter or a data stream. Notably, the other data may be transmitted using different modulation schemes, for example. Different transmitters or different communication devices are in general associated to different analog waveforms, reference signals, and/or comb-like sequences, and are therefore uniquely identified. In examples, a specific waveform is chosen from a plurality of waveforms.

Fig. 1.6 shows an example in which reference signal 171 (which may be an example of signal 131', 131", and/or may be the signal 142 generated by the generator 141 and/or 141a) is generated between signals 172 and 173 (the signal evolution as in Fig. 1.6 may change according to different strategies and techniques). While signals 172 and 173 are generated using a particular modulation scheme (e.g., the modulation scheme used for transmitting all the other data, e.g., using elements of the structures 320 or 330, discussed below and in particular in sections 3.1.2.3 and 3.1.2.4, respectively), the waveform 171 may be obtained using the generator 141 or 14a and/or the method 150 (or other techniques discussed above and below). For example, the communication device may select between:

- the generator 141 or 141a for transmitting the waveform 171;
- the elements of the structure 320 for transmitting the other parts of the header;
- the elements of the structure 330 for transmitting the payload.

The waveform 171 may be orthogonal, in TD or FD, to other waveforms that are simultaneously transmitted by other communication devise or transmitters.

Here below, there is disclosed (e.g., in sections 3) communication device [optical communication device] for communicating with a plurality of other communication devices [optical communication devices] using a wireless link [wireless optical link], wherein the communication device is configured to use different codes [e.g. different codes of fixed or variable length] for communication with different of the other communication devices [for example, to allow the other communication devices to identify which data is directed to them, for example, to achieve a code division multiple access], wherein the communication device is configured to vary a number of the codes and/or a length of the codes [for example, in dependence on a number of receiving other communication devices, and/or in dependence on a channel condition and/or in dependence on a desired data rate] and wherein the communication device is configured to vary a type of a pulse-amplitude modulation [e.g. a number of amplitude states of a pulse amplitude modulation] [e.g. to switch between 2-PAM,4-PAM.8-PAM and 16 PAM] [for example, in dependence on a number of receiving other communication devices, and/or in dependence on a channel condition and/or in dependence on a desired data rate].

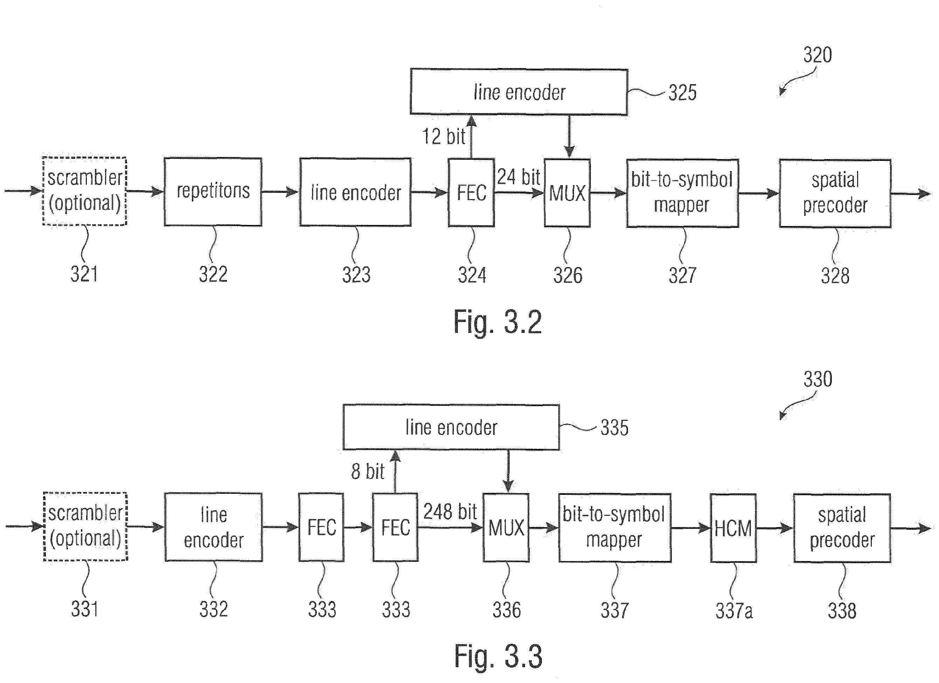

There is also disclosed (e.g., see also Fig. 3.3) a communication device [optical communication device] for communicating with a plurality of other communication devices [ optical communication devices] using a wireless link [wireless optical link],wherein the communication device is configured to use a Hadamard-coded modulation [for example, for communication with different of the other communication devices [via the wireless optical link; to allow the other communication devices to identify which data is directed to them; for example, to achieve a code division multiple access], wherein the communication device is configured to vary a number of used codes in the Hadamard coded modulation and a parameter M determining a number of amplitude states of a Pulse-Amplitude-Modulation (PAM) [, in dependence on a number of receiving other communication devices, and/or in dependence on a channel condition and/or in dependence on a desired data rate]. Accordingly, it is possible to adapt the data rate to the modified conditions of the channel over a wide range.

There is disclosed a communication device [optical communication device] for communicating with a plurality of other communication devices [e.g. optical communication devices] using a wireless link [e.g. a wireless optical link], wherein the communication device is configured obtain an extended header data unit, in which a header information [for example, a physical layer header, which describes a frame type and a length of a physical layer service data unit] is duplicated [e.g. repeated or copied multiple times], and to input the extended header data unit into a Reed-Solomon-Code-based forward error correction [e.g. error correction], to obtain an error-tolerant data unit [for example, an error-tolerant data unit representing the header information]. See, inter alia, section 3.2.1.

There is also disclosed (e.g., in sections 3.1.2.3.5, 3.1.2.4.5) a communication device [optical communication device] for communicating with a plurality of other communication devices [optical communication devices] using a wireless link [wireless optical link], comprising:

- a digital processing unit [for example, for encoding a header and/or a payload, and for mapping bits of the header and/or of the payload to modulation symbols]; and
- an optical frontend for transmitting optical signals;

wherein the digital processing unit is configured to provide a **DC-free output signal** to the optical frontend [wherein the DC-free output signal may be an encoded and symbol-mapped representation of the header and/or of the payload] [wherein the optical front-end, for example an analog optical frontend, may set a modulation amplitude and/or a bias of an optical transmitting device, like a light emitting diode or a laser diode].

There is also disclosed (e.g., in section 3.1.2.3.4) a communication device [optical communication device] for communicating with a plurality of other communication devices [optical communication devices] using a wireless link [wireless optical link], wherein the communication device is configured to transmit a channel estimation frame [e.g. a "probe frame"] using a complete set [or full set] of optical transmitters [light emitting diodes or lasers], and wherein the communication device is configured to selectively transmit a data frame [e.g. a frame comprising data and/or configuration information] using selected [optical] transmitters [which may be a true subset or a subset in a proper sense of the complete set].

There is also disclosed (e.g., in section 3.1.2.4.7) a communication device [optical communication device] for communicating with a plurality of other communication devices [optical communication devices] using a wireless link [wireless optical link], wherein the communication device is configured to transmit a plurality of data streams using a plurality of transmitters [optical transmitters], wherein the communication device is configured to determine, using which of the transmitters and using which intensities a first of the data streams is to be transmitted; and wherein the communication device is configured to determine, using which of the transmitters and using which intensities a second of the data streams is to be transmitted,

The examples above and below may refer, instead to a communication device, to a set of multiple communication devices, The set may communicate with a plurality of other communication devices.

## 2. Examples comprising inter alia, medium access procedures for coordinated VLC network operation

This section proposes, inter alia, generic MAC procedures for coordinated operation of a VLC network operating in multipoint-to-multipoint mode and discusses the requirements for essential fields.

### 2.1 Introduction

The objective of this contribution is to enable coordinated operation for MP2MP (multi-point to multi-point) communication using visible light communication (VLC) in industrial wireless scenarios having high QoS requirements. High link availability and low latency are therefore required. The proposal is a centrally coordinated medium access (MAC) protocol for the entire VLC network consisting of multiple lights and multiple mobile devices.

Our general approach in this contribution is i) to propose a generic MAC for VLC considering the special needs in industrial wireless scenarios and to define the required fields at first in a generic manner and/or ii) to specify how the functions in these fields can be realized by using G.hn/G.vic as a physical layer. By comparing the intended function with what is already defined, implementation becomes clear, gaps in the existing specification can be identified.

### 2.2 Discussion on the existing systems

VLC has been a hot research topic in recent years. Most publications consider the application of VLC in indoor scenarios as a replacement or complement to Wi-Fi, coined as Li-Fi, where every light bulb is used as a wireless access point. However, industry is still sceptical about this idea as it is challenging and needs large volumes, low cost, low energy and miniaturized communication frontends that can be integrated in every light bulb and into mobile devices. As it was clear that these challenges can only be met on the long term, recent research was looking onto new use cases that can be realized more in the near term, in which the high requirements of Li-Fi can be relaxed and where the light can leverage its unique selling points in the ever-lasting competition with radio.

A first such new use case is wireless backhauling of small radio cells. Those small radio cells will be most likely installed on each outdoor luminaire. Accordingly, VLC backhauling is related to the field of connected lighting. Second, there is the new field of industrial wireless communications, which is considered as key enabler for the so-called future software-defined manufacturing (denoted as Industrie 4.0 in Germany). Overcoming the currently wired communications and removing the wires is considered as an essential step to realize more flexibility for the manufacturing of personalized products. VLC can play a key role here because nowadays the radio spectrum is already overcrowded in these manufacturing halls and VLC brings new, unused spectrum that can be used without limitations. Finally, as a further step towards Li-Fi, enterprise scenarios with e.g. secure wireless conference rooms in a bank, could be realized by using the light as a wireless medium, instead of radio, because it can be well localized and does not penetrate through walls.

The two latter use cases already need a functionality which is considered a key feature of Li-Fi as a fully networked wireless technology which supports seamless connectivity when users move in the area of a single light and from one light to the other. Such functionality is widely developed already in cellular mobile radio, with its generations of 2G, 3G and 4G and the ongoing discussion towards 5G. 5G is supposed to include small mm-wave cells with only ten to hundred meters coverage. They are probably used in the second phase of 5G to increase the area capacity by orders of magnitude. VLC would realize even smaller cells, with one or at most few meters diameter, and even higher area capacities, accordingly.

It could seem obvious at first sight to reuse the technology of cellular networks for Li-Fi. Looking closer to it, however, this approach is not viable. Cellular networks do have a long history, together with the related complexity and requirements for backwards-compatibility introduced over more than 3 decades. Moreover, the key concept of mobile networks is to consider each cell an isolated transceiver, reusing the same wireless resources at a certain distance. Hence, a cellular network always operates in an interference-limited manner, limited by other transceivers reusing the same wireless resources. At the end of the 4G development, new cooperative networking technologies were investigated, in which clusters of cells serve a number of users jointly.

Due to the coordinated transmission, radio transmission can be made much more reliable than it is today in particular at the cell edge and in addition, a higher overall throughput can be achieved in this way. While the obvious benefits have been demonstrated both in theory and experimentally, the coordinated network topology needs a high degree of flexibility and moreover it breaks with the conventional cellular network design. It was therefore incompatible with the backhaul network architecture in 4G. This situation led to the conclusion that the technology is not mature enough to be introduced as an add-on to 4G. Nevertheless, these coordinated wireless networking concepts appear, to the inventors, promising and likely introduced in the context of the new 5G mobile network.

In preparation of 5G, new fronthaul concepts have been investigated with the main intention to maintain mobility but transmit and receive wireless signals using dynamic clusters of cells. Part of the higher MAC layer functionality is centralized in these new fronthaul concepts while the lower MAC layer and the physical layer are placed in "dumb" remote radio heads distributed in the intended coverage area. The functionality of the higher MAC layer can usually be implemented in software and thus be virtualized, i.e. operated on commodity hardware somewhere in the cloud network and act as centralized controller. This new concept is also denoted as Cloud Radio Access network (C-RAN). Because VLC will be integrated with 5G or following mobile networks, it is wise to consider the C-RAN concept in its specifications early on.

In a limited area, such as in a manufacturing cell, which is isolated from other areas e.g. by walls, it is reasonable to consider a single centralized controller for the entire network of small VLC cells. The fronthaul concept and the points for splitting the functionality between the central controller and the remote radio head have been widely discussed recently. What is currently missing even in the field of mobile radio is a MAC layer that supports the use of clusters cells and allows the C-RAN to follow the mobility of users within one cell and between the cells.

Concerning the first functionality, it is performed by the so-called link adaptation and it is already part of the wireless MAC. In 2G, 3G and 4G, however, the second functionality is performed by using the handover procedure from one cell to the other, and interference in managed in addition in a so-called mobility management entity (MME). Both handover and MME are considered part of the core network in 5G and are basically out of scope for the mobile MAC.

In the new C-RAN concept, the handover and interference management functionalities are now considered part of the MAC. The advantage is that decisions are made nearer to the wireless channel and systems can track mobility with significantly reduced delay and in a more reliable fashion than in 4G. This is in fact required for some of the new use cases such as industrial wireless communications considered for VLC. Higher reliability can be supported in general by coordinated multipoint transmissions, the simplest form of which is macro-diversity, Lower latency can be reached by making decisions related to mobility inside the RAN, and not involve a core network which introduces additional delays.

What is missing in the C-RAN context, besides the new fronthaul concept with the variable functional split, is an entirely new concept for the MAC layer, which enables coordinated multipoint transmissions and low latency by moving these essential mobility functions from the core network into the mobile MAC layer. The objective of the present contribution is to start the discussion about the new wireless MAC in the relatively context of VLC which is simpler than radio because of the absence of fading. However, it is understood that learnings are applicable besides VLC also to using radio waves for mobile communications.

Contributions in this sections comprise, inter alia:

- Separation of MAC layer functions into global, regional and local transmissions
- Generic definition of appropriate global, regional and local frame structures and fields
- Essential MAC layer procedures, such as joining a network, multi-cell channel estimation, feedback delivery and joint transmission and detection.
- Generic functions realized using features of G.hn/G.vic.

2.3 Topology examples

A VLC domain (e.g., network 210) comprises a domain master (DM) 212, its associated relaying end points (REPs) 214 and end points (EPs) 216, see Fig. 2.1. There is, in examples, only one wireless hop (218) between the REPs 214 and the EPs 216 and a reliable, preferably fixed network link 217 between the DM and each REP.

Normally there is no visibility among different VLC domains, as they will be separated e.g. by walls. Otherwise, orthogonal operation of different domains is left as an implementer's issue, and can be realized e.g. by using different LED wavelengths, separate time slots or other frequency bands. Other VLC topologies (P2P, P2MP, non-coordinated MP2MP) shall also be considered orthogonal and not interfere with the coordinated topology in which strict QoS requirements are targeted.

REPs 214 may be placed in a fixed location e.g. as part of the illumination infrastructure. In the downlink, REPs relay frames coming from the domain master (DM) to the EP. In the uplink, frames originating from the EPs are relayed by the REPs and forwarded into the infrastructure network, ending in the DM.

The DM 212 is not necessarily a dedicated physical device. Its functionality may be served by a virtual entity, co-located with a REP or placed in the cloud. The DM has both data and control plane capabilities in order to support the mobility of EPs in the VLC network.

In the data plane, the DM 212 may provide a smart packet forwarding capability through the infrastructure network. It is able to steer the uplink and downlink traffic of mobile EPs through flexibly assigned REPs and the infrastructure network. Moreover, the DM 212 may take over essential MAC layer functions such as security, retransmissions and selection of transmission points.

In the control plane, the DM 212 assigns wireless resources so that they are used orthogonal between adjacent EPs 216 and will be extensively reused between more distant ones. Wireless resources can be time slots and one REP or clusters of multiple REPs used for joint transmission and detection.

2.4 Generic medium access protocol

In industrial wireless scenarios, critical traffic with high QoS requirements preferably makes no or little use of contention-based transmission opportunities (CBTXOPs). CBTXOPs are only considered as an exception for applications having less stringent QoS requirements. If used CBTXOPs should use the RTS/CTS mechanism prior to transmission, in order to overcome visibility issues due to the directed lights with limited coverage and to solve hidden terminal problems.

Contention-free medium access is considered as the main operation mode. In the coordinated network topology, it is based on contention-free scheduling of VLC transmissions between the DM and EPs via the REPs. All nodes must therefore be synchronized and access the channel in an orthogonal manner. (While synchronization between REPs can be achieved using the IEEE 1588v2 precision time protocol (PTP) from a PTP grand master in the network infrastructure, the mobile End Points must support PTP also over the wireless VLC link.)

Consequently, transmissions are only performed in assigned CFTXOPs. Regularly, the DM creates and maintains a global medium access plan (MAP) which is valid for the entire coordinated VLC topology, using a scheduling algorithm. In the global MAP, contention-free transmission opportunities (CFTXOPs) are assigned to all REPs and all EPs. All transmissions, i.e. data, management and control messages, happen only in those designated resources.

2.4.a) Connectivity matrix

The aim of a mobile scheduling algorithm is to reuse space, to minimize inter-channel-interference (ICI) and to maximize the signal-to-interference-and-noise ratio (SINR). In order to make good scheduling decisions, the DM must be aware of the existing links between all nodes.

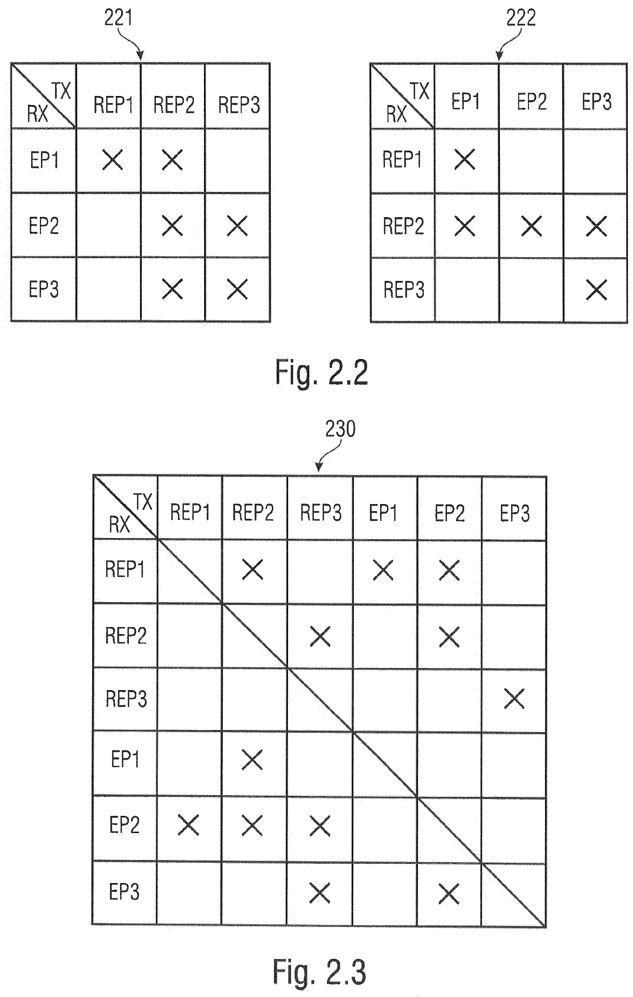

Link quality can be summarized in a connectivity matrix (CM). An example reduced CM is depicted in figure 2.2 (showing an example of a reduced connectivity matrix 221, CM, in downlink (left) and 222 uplink (right) direction). It contains only the binary values X or 0, indicating the presence or absence of a potential physical connection (i.e. a channel).

For more advanced scheduling decisions, aiming at maximum performance, the connectivity matrix can be extended by quantitative channel quality information (CQI), yielding e.g. a matrix with achievable rates, or even more detailed channel state information (CSI) which is in principle a complex number measuring the complex channel amplitude in the frequency domain what is useful for joint physical layer processing of the signals transmitted or received by multiple REPs.

The CM can be reduced, when not every pair of two nodes is considered to have a potential link. This may be the case when up- and downlink are orthogonally multiplexed, i.e. transmissions by EPs cannot be received by other EPs and transmissions by REPs not by other REPs vice versa. This is achieved e.g. by applying wavelength-division multiplexing (WDM) for up- and downlink. The reduced CM can then be split in two simple matrices for up and downlink each. An example for a reduced CM is depicted in figure 2.2.

In a network without orthogonality between up- and downlink, theoretically all possible links must be considered for scheduling. This includes in addition transmissions by REPs, received by other REPs as well as transmissions by EPs, received by other EPs. The full CM 230 depicted for example in figure 2.3 represents that there are much more links in this scenario. Orthogonal and interference-free scheduling of transmissions under these circumstances is well known to introduce a huge increase of complexity in cellular networks operating in time-division duplex (TDD) mode, in particular if the split between up- and downlink is fully flexible among the cells. A common, yet suboptimal practice is to tightly synchronize all network nodes and to introduce a flexible uplink/downlink split on a network-wide basis.

In examples, the DM may have instantaneous knowledge of the CM. Accordingly, admitted EPs have to update their entries in the CM regularly. EPs joining the network have to measure their most visible REPs and inform the DM about them to be included in an updated CM. The period of these reports may vary depending on mobility and traffic needs of individual EPs.

2.4.b) Network joining

The DM may ensure that all REPs in a coordinated VLC network (e.g., 210) broadcast a beacon frame. The purpose of the beacon frame is to provide advertisement of the network and regular synchronization of the EPs with the network. Furthermore, the beacon frame contains, among other information, a resource specification, e.g. a time slot, for a single or multiple CBTXOPs in the MAC cycle designated for the network joining procedure. The CBTXOP for joining the network is global, i.e. uses the same resources in the entire network. In this way, deterministic transmission is possible at any point in the network so that there will be no interference for data transmissions having strict QoS requirements. Afterwards, a new EP can use a designated CTXOP to access the network. As a response to the beacon and after estimating the multi-cell channel, it transmits a feedback packet using the well-known carrier-sense multiple access scheme with collision avoidance (CSMA/CA) with prior exchange of short ready-to-send/clear-to-send (RTS/CTS) packets. Newly arriving EPs may transmit packets after i) receiving a beacon which includes the designated CBTXOP and ii) gathering multi-cell channel information to multiple surrounding REPs and iii) providing feedback about their connectivity.

2.4.c) Macro diversity

Individual VLC links may suffer from rapidly deteriorating connectivity, e.g. if the line-of-sight (LOS) between a REP and an EP is suddenly broken. But the same EP can have free LOS links to multiple adjacent REPs simultaneously. Macro diversity is a simple scheme exploiting this opportunity, i.e. use adjacent REPs to jointly transmit or receive the same signal to one RP or from one EP, respectively.

All packets designated for a particular EP in the downlink are **jointly transmitted** via a cluster of REPs to which the EP is usually connected to, e.g. by using the above-mentioned macro-diversity scheme. In the uplink direction, received packets from the particular EP are forwarded to the DM, even if multiple copies are received by multiple REPs in the cluster and forwarded to the DM. At the DM, such redundant information can be used for **joint detection.** (In the infrastructure network, efficient distribution of packets can be reached in different ways, e.g. by assigning another VLAN identifier to each REP or cluster of REPs to which the EP can be connected. Downlink information is then sent as a broadcast packet from the DM to all REPs to which the EP is connected by using the corresponding downlink VLAN address. For its uplink transmissions, the EP can just transmit its packets to the MAC address of the DM, together with its own MAC address. The DM performs combining eventually, based on the common MAC address.) Either one copy with valid parity check is selected or all copies are combined such that the reliability of wireless transmissions is improved.

At the MAC layer of each REP in a cluster, the same data have to be transmitted. This requires a centrally synchronized data transmission, which can be reached by i) synchronizing the physical and medium access layer e.g. by using synchronous Ethernet (SynchE) and the precision time protocol (PTP) and ii) by embedding time stamps in each packet, taking reference to the absolute time normal used at the DM.

2.4 Generic frames

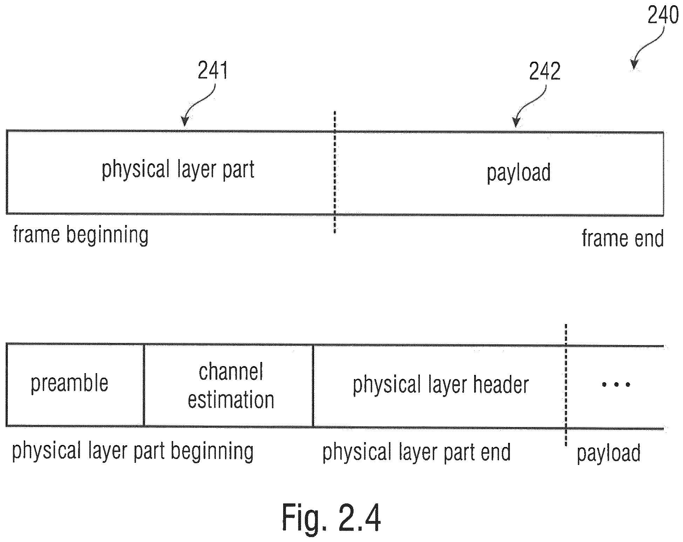

Every frame 240 may be subdivided into two sections, as depicted in Figure 2.4. The physical layer part 241 may permit to obtain synchronization and channel information at the receiver. Furthermore, it provides elementary control information for the data link layer, such as assigned resources as well as modulation and coding schemes used for data transmission. The second part 242 is payload.

Transmissions within a VLC network can be classified by means of how many REPs transmit jointly:

a) Global transmissions 251
Global frames are transmitted in a synchronous manner by all REPs in the VLC domain and are possibly replied by any EP served by the network.

b) Regional transmissions 252
Regional frames are transmitted simultaneously by individual REPs or clusters of REPs in different parts of a room provided that interference is negligible. Similar like global frames, regional frames are transmitted in a synchronous manner by all REPs within a cluster. It is also possible that regional frames are transmitted in different time slots, if adjacent clusters have an overlap. Regional transmissions are replied by any EP served by the cluster.

c) Local transmissions 253

Local frames are transmitted by individual REPs or EPs in an interference-limited manner. In case of OFDM, besides making transmissions orthogonal in space and time, this can be implemented so that that a REP or EP is assigned another subcarrier comb, where the comb spacing is equal or larger than the frequency reuse factor F. The comb can be reused by a distant REP or EP, and thus the transmission is interference-limited. All parts of the local frame are transmitted by using the same subcarrier comb, i.e. preamble, channel estimation, header and eventually also local data.

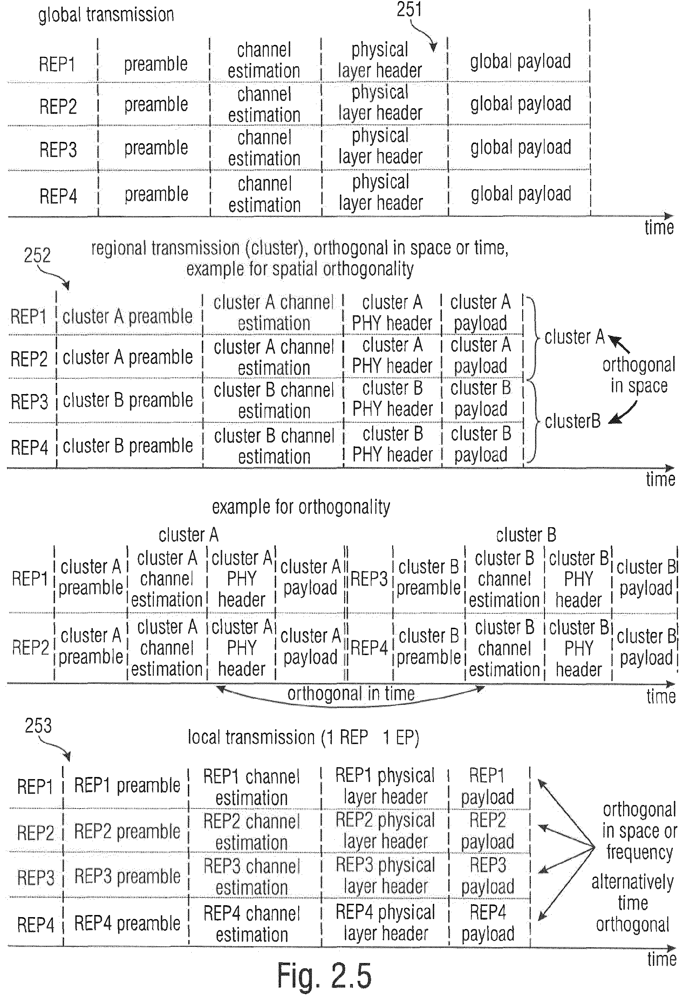

Accordingly, there are globally, regionally and locally transmitted frames. Examples are shown in Figure 2.5.

Briefly summarizing the latter aspect, a VLC network and/or a domain master may be configured to distinguish different types of frames to be transmitted in downlink, the types comprising

one or more first ones with frames of that type being transmitted in a synchronous manner by all REPs of the VLC network,

one or more second ones with frames of that type being transmitted by one or more REPs within a predetermined region such as a room,

one or more third ones with frames of that type being transmitted by one REP individually. In so far all the details described elsewhere herein may or may not combined with the just-mentioned and highlighted one.

The generic **beacon frame** is an example for a frame of the first type and consists of a global frame transmitted simultaneously by all REPs in the VLC network. It contains a synchronization sequence, a channel estimation sequence and a header with information relevant for all EPs in the VLC domain. In particular, the common header contains a user-defined domain name, the MAC address of the DM, a feedback mode field, a global medium access plan (MAP) which indicates at least one or more MAC cycles, where CBTXOPs are scheduled. As explained above, EPs can use one of these CBTXOPs to access the network by using CSMA/CA with RTS/CTS. That is, a frame of the first type may, for instance, indicate a global medium access plan (MAP) which indicates at least one or more MAC cycles.

The generic **multi-cell channel estimation frame** is an example for a frame of the third type and, thus, a local frame. It contains REP-specific training signals which enable the EP to estimate the channel to its nearest REPs in the downlink direction. Sequences transmitted by adjacent REPs are orthogonal. Sequences transmitted by more distant REPs may be reused in the coverage area. If the sequence is reused K times in a VLC domain, and the total number of available sequences is L, the reuse index k=1...K together with the sequence index l=1...L can be used to identify a concrete REP in a VLC domain. Accordingly, the header of the network training frame must contain the reuse index k=1...K and it may contain the sequence index l=1...L which could also be implicit information. That is, a frame of the third type may, for instance, contain a REP-specific training signal which enable an EP to estimate the channel to the REP in the downlink direction. Briefly summarizing the latter aspect, a REP of a VLC network may be configured to intermittently transmit network training frames each carrying an REP-specific training signal in form of a pilot sequence, wherein header of the network training frames contains a reuse index indicating an index of reuse of the pilot sequence. The EP may be configured to identify a concrete REP based on such transmit network training frame, namely based on reuse index and pilot sequence. The pilot sequence may be characterized by a sequence index which may optionally also be contained in the header. In so far all the details described elsewhere herein may or may not nb combined with the just-mentioned and highlighted one.

The generic **feedback frame** can be either global or regional and, thus, may be an example for a frame of the first or second type. As a global frame, it is commonly used for joining the network. Therefore, it must contain the connectivity information for the corresponding EP. It can happen that either the REP is the same for several EPs or subsets of REPs in the selected clusters are the same. The DM will then decide what set of REPs and what scheduling is used for a given EP. Such complex decisions may need more detailed feedback information. (In the downlink, the DM will need to request CQI feedback from EPs with overlapping REPs or clusters of REPs. If joint transmission is supported at the PHY layer, which is expected if large numbers of EPs are admitted in the domain, CSI feedback is needed.) Accordingly, the feedback mode (CM, CQI, CSI) is signaled by the DM in the header of a control frame. If the same feedback mode is used globally, this information is contained in the beacon signal. This global assignment can be overwritten by transmitting a regional control frame. In this way, the DM can switch between more or less advanced transmission schemes applied either in the entire VLC domain or for one REP or multiple adjacent REPs in a cluster. Usually, feedback is provided in a compressed manner to save overhead. It may contain only the most relevant REPs having signals above a network-defined threshold, the most relevant taps in case of a multi-path propagation channel and a limited number of quantization bits per REP and/or per tap sufficient to reach a predefined mean square error (MSE) of the channel information. The generic feedback frame may also contain additional information to authenticate the EP in the VLC domain. Briefly summarizing the latter aspect, a VLC network and/or a domain master may be configured to activate different channel feedback modes in different portions of the VLC network. A default feedback mode may be set globally. Frames of lower scope such as frames of the second or first type may signal a deviation from the default mode so as to appoint another feedback mode. An EP of a VLC network may be configured to change its channel feedback mode according to frames of lower scope sent by the VLC network.

Depending on the channel feedback mode chosen, different channel information is fed back by the EP to the VLC network. The pilot sequence may be a comb-like pilot arrangement as explained below. In so far all the details described elsewhere herein may or may not nb combined with the just-mentioned and highlighted one.

The generic **medium access frame** may be an example for a second type frame and informs the EP what transmissions are scheduled by transmitting the relayed medium access plan **(RMAP).** Typically, the medium access frame is regional and sent jointly by one REP or a cluster of adjacent REPs. Note that spatial reuse is typical for both, data and RMAP information. If EPs are distant from each other, interference between REPs or clusters of multiple REPs is negligible. Then the DM will select disjoint REPs, or disjoint clusters of REPs, for each EP.

2.5 Examples of detailed MAC procedures

2.5.a) Beacon transmission

Synchronization of the EP to the VLC network including the allocation of a CBTXOP for network joining, is achieved using the beacon frame. The beacon is a global frame transmitted jointly by all REPs in the VLC network.

The CBTXOP allocation, contained in a beacon frame, is specified as part of the global MAP and must be extracted for all REPs. As a result, the information contained in the global MAP is split into two signals on the wireless hop: the beacon frame and the RMAP (see section 2.5b)).

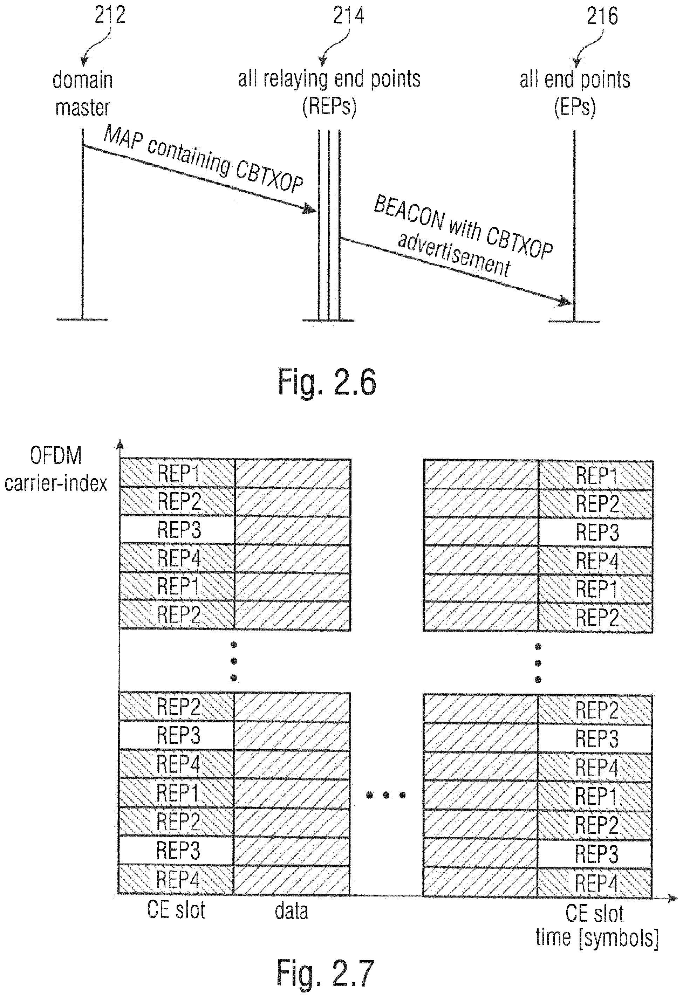

An example of global beacon frame transmission (jointly by all the REPs) is provided in Fig. 2.6.

2.5.b) Multi-cell channel estimation

Multi-cell channel estimation may be performed in a dedicated time slot, allocated by the DM. To keep the CM up-to-date, the channel between all participating REPs and EPs must be measured on a regular basis. Therefore, at least one orthogonal measurement from every REP to every potential EP must be performed, and one from every EP to every potential REP.

By using OFDM, for instance, this can be achieved in a resource-saving manner by using a comb-like pilot arrangement which is well-known in MIMO-OFDM communication systems. Each transmitter sends pilot signals only on a grid of equally-spaced subcarriers. This whole comb is shifted by an integer number of subcarriers when using another REP, This way, pilots of adjacent REPs can be made orthogonal in the frequency domain. Likewise, distant REPs reuse the same comb. At the receiver, pilots arrive simultaneously on all subcarriers. By knowing the comb spacing and the REP-specific shifts, the receiver can extract the corresponding pilots and interpolate the channel between the available pilots (e.g. [1]).

Multiplexing pilots can be done statically in the downlink. It is also possible to use the same scheme for local data transmissions of individual REPs, e.g. to communicate their REP identifier (ID), their MAC address and other local information. In the uplink direction, however, the EP's mobility forbids a static pilot assignment. For uplink channel estimation, pilots must be assigned dynamically.

Figure 2.7 shows examples of pilot combs used for OFDM-based multi-cell channel estimation

2.5.c) Feedback delivery

While being mobile, an EP's connectivity to the VLC network can vary over time.

If downlink connectivity has changed, this is detected easily by the EP by observing i) the regular beacon frame and ii) the multi-cell channel estimation frame. In idle mode, the EP may send an updated global feedback frame during the next available CBTXOP.

Modified uplink connectivity may not be detected in this way as long as the EP remains idle. Hence, before an EP can start any uplink transmission, it has to send an updated feedback frame, even if downlink connectivity was unchanged. Note that the uplink channel may be measured as part of the same frame transmitted for feedback delivery from the EP to the REP, or a cluster of REPs. Briefly summarizing the latter aspect, an EP of a VLC network may be configured to enter, from idle mode, an active mode by transmitting a frame comprising a channel feedback signal to the VLC network, the frame also comprising pilot signals for enabling uplink channel estimation. In so far all the details described elsewhere herein may or may not nb combined with the just-mentioned and highlighted one.

Feedback delivery happens in a designated time slot after receiving both, the beacon and the multi-cell channel estimation frame. The feedback packet is fed forward by the receiving REP, or the cluster of REPs, to the DM.

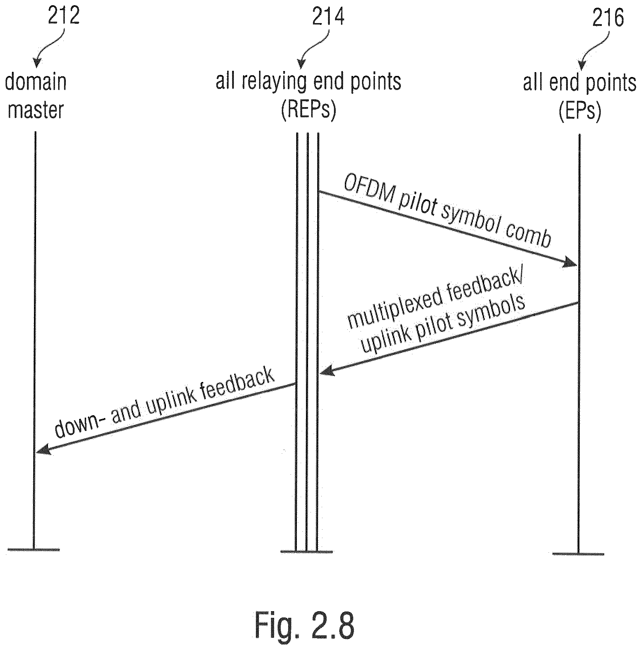

Figure 2.8 shows a multicell channel estimation and feedback delivery.

2.5.d) d)MAP distribution in parallel clusters

The DM maintains a global MAP, which has to be disseminated periodically to all REPs. However, the overhead to send the whole MAP is high and not all information is required at all EPs. In order to save overhead, only the particular part of the MAP is sent to the EP which is needed for demodulation of its own data. As this fraction of the map is transmitted by the REP or a cluster of adjacent REPs, it is denoted as the relayed MAP (RMAP). Same as for data, it is implicitly assumed that the DM assigns spatial and temporal resources so that interference is limited. Moreover, data are always modulated in a conservative, interference-aware manner so that detection is always possible. The same can be assumed for control traffic such as the RMAP transmission. Hence, the RMAP can be transmitted in parallel in different clusters of REPs, as illustrated in Figure 2.9 (showing a MAP distribution in different clusters of REPs).

### 2.6 Applicability of G.hn mechanisms

#### 2.6.a) Centralized scheduling

The G.hn MAC is already centrally coordinated. The DM generates a MAP for every MAC cycle and broadcasts it to all nodes in its domain. The MAP frame includes defines start time and length of TXOPs and the nodes that may use the TXOP for transmission (G.9960, 8.2.1, 8.3.1). The frame specification used for MAP transmission may also be used for G.vlc (G.9961, 8.8).

As the DM functionality is conceived to be located on a central unit, MAPs must be transmitted over the infrastructure network. REPs would have to apply MAPs received over an Ethernet interface. The relaying of MAPs is already part of the G.hn specification (G.9961, 8.8.1, 8.5.6). However, because on a wireless medium not all nodes are connected to each other, not the whole MAP but only a regional fraction of the MAP has to be broadcast by a cluster of REPs over the VLC channel.

In G.hn synchronization of the nodes is achieved based on the MAP frame transmission. A node, decoding the MAP frame reads the NTR field, containing the DM's time stamp, and synchronizes its clock accordingly. (G.9960, 7.1.6.2). In the infrastructure network, this synchronization of time must be supported by the PTP protocol. Moreover the frequency between all REPs must be synchronized via the infrastructure network, e.g. by using SyncE.

G.hn specifies a minimum MAC cycle duration of 5ms (G.9961, Table 8-14). However, due to quickly changing channel conditions in VLC, it may be necessary to react faster on diminishing links. Shorter MAC cycles may be beneficial for higher mobility in VLC networks. This could be introduced in conjunction with increased subcarrier spacing and reduced symbol duration, accordingly.

#### 2.6.b) CBTXOPs

G.hn defines shared TXOPs for CSMA-based multiple access. The time slot used for joining the domain in the proposed VLC system could be realized by scheduling a CBTXOP in the MAP. The network admission protocol (G.9961, 8.6.1.1) can be reused, eventually the relayed network admission procedure may be used over a REP (G.9961, 8.6.1.2).

In (G.9961, 8.3.3.2), the assignment of two nodes to a CBTXOP is forbidden when those two nodes are hidden from each other. As the DM is supposed to have global visibility knowledge, CSMA-based resources may be scheduled in a way the standard describes. QoS-traffic, however, should always use CFTXOPs.

#### 2.6.c) QoS and traffic flows

G.hn specifies the establishment of traffic flows, with a guaranteed bandwidth (G.9961, 8.6.2). However, in a dynamic topology, it may not be possible to guarantee a predictable bandwidth, latency or jitter for a long time as the link availability and its capacity may vary due to the mobility of EPs. Therefore, reserving of flows is not applicable or duration must be limited according to the expected availabilities.

#### 2.6.d) Routing and topology management

G.hn specifies the collection of topology information at the DM, in case of centralized routing and topology management (CRTM) mode (G.9961, 8.6.4). Therefore, the DM has the possibility to control the links that are used for data transmission.

#### 2.6.e) DM management capabilities

The DM must be capable of transmitting and receiving a series of management frames. As most functionality in the current G.hn standard can also be achieved over a relay via an EP, it should be possible to achieve the same functionality by relaying over an infrastructure network. Specifically this includes the following functionality (G.9961, 8.6):

- Domain master selection: DM role will be statically assigned
- Network admission (8.6.1): receive and transmit non-time-critical management frames.
- Bandwidth management (8.6.2): Translates to the generation and distribution of the MAP,
- Routing and topology management (8.6.4): receive and transmit management frames.
- Per-node power spectral density shaping: This may be interesting for interference avoiding and could constitute an additional degree of freedom for the scheduling

<u>2.7. How to build essential frames by using G.hn</u>

<u>2.7.a) Beacon frame</u>

**Beacon** frame transmission is intended as a **global** transmission. It serves the purposes of synchronization of all EPs with the network, advertisement of network presence and assignment of CBTXOPs for network admission.

The beacon frame is closely related to the MAP frame defined in G.hn. The beacon may be transmitted using a very robust modulation and coding schemes similar to transmitting a (R)MAP-D in G.hn (G.9960, 7.1.2.3.2.1.10). However, the beacon frame does not contain any complete MAP, but merely the specification of CBTXOPs for network admission. Communication of the remaining MAP information is part of the **medium-access-frame (RMAP)** and transmitted regionally.

The beacon header must be transmitted bitwise equal by any REP in the network. Additional information, destined for the whole network, may be extracted from the global MAP and transmitted via the beacon frame in the payload section.

<u>2.7.b) Multi-cell channel estimation frame</u>

The **multi-cell channel estimation frame** is transmitted **locally** and it enables downlink channel estimation. Local transmissions use orthogonal multiplexing of transmissions from adjacent REPs.

In G.hn, there is a dedicated **probe frame** for the purpose of channel estimation. The comb approach described above can be realized by masking specific subcarriers in G.hn for specific REPs for the duration of the whole probe frame. As a result, multiple REPs could jointly transmit probe frames, whose payload (i.e. probe symbols a.k.a. pilot symbols) are orthogonal in the frequency. At the receiver, the missing channel information can be interpolated in software, if received pilots are made accessible by the PHY layer.

Moreover, location information of each REP may be transmitted as meta-information with those local probe frames, based on which an EP could precisely calculate its position using trilateration. This is simpler than calculating the location in the DM by gathering information from EPs over a dedicated protocol.

<u>2.7.c) Feedback frame</u>

The feedback frame is transmitted by EPs in uplink direction. This can be realized using a general-purpose data frame, containing a management message (LCDU, similar to other channel estimation messages). The new management frame could also incorporate all additional information required by the channel estimation protocol. Using an uncontended CBTXOP time slot for feedback transmission by every EP is recommended.

Albeit uplink channel estimation could be achieved separately using a probe frame similar to the downlink channel estimation, it would be efficient to perform the uplink channel estimation procedure simultaneously within the feedback transmission frame.

<u>2.7.d) Medium access frame (RMAP) transmission</u>

The allocation of TXOPs, except of the global network admission CBTXOP, is transmitted via RMAPs. They are related to RMAPs from G.hn in terms of being relayed by the REPs. However, for VLC, RMAPs transmitted by the REPs may not contain the complete network MAP. Rather they contain only allocations concerning the EPs that physically receive the RMAP. Therefore, RMAPs are transmitted **regionally.**

The frame format can be adopted from G.hn's RMAP frames. Nevertheless, the transmission of RMAPs may not always happen in the same timeslot for all clusters. Between overlapping clusters, it may be made orthogonal by using different time slots so that interference is avoided.

<u>2.7.e) Macro diversity</u>

For joint transmission of data it is required that the MAC layer has the same data available on all REPs of a cluster.

The same data are multicast by the DM to all REPs in the cluster in the infrastructure network. Clusters would therefore be static, or at least preconfigured e.g. by using dedicated VLAN IDs for each cluster and dynamically selecting it in an appropriate control message protocol.

As the transmitted signals must be bitwise equal, for example, the source DID within the PHY-frame must be the same. For addressing of a cluster, a virtual and temporary DID could be assigned to a cluster. The establishment of clusters could be separated from the data path, and constitute a separated management process. Using a softMAC, it should be possible to set arbitrary fields in the transmitted frame.

The HARQ and acknowledgement mechanism, specified in G.hn, interferes with the macro-diversity approach. Currently, there is the possibility to request in every transmitted frame the return of an immediate ACK, a delayed ACK or no ACK. When using macro diversity, it is intuitive, that either no ACK should be requested, or that the non-receipt of an ACK at a REP should not trigger a retransmission. Rather the non-receipt of an ACK should be signaled further to the DM, which would take over responsibility of the retransmission from a centralized buffer.

All of the above example, notes and descriptions, although related to and exemplified using VLC, could also be used for radio or acoustic transmission, for example.

Reference

[1] S. Schiffermuller and V. Jungnickel, "SPC08-3: Practical Channel Interpolation for OFDMA," IEEE Globecom 2006, San Francisco, CA, 2006, pp. 1-6.doi:10.1109/GLOCOM.2006.576 URL: http://ieeexplore.ieee.org/stamp/stamp.isp?tp=&arnumber=4151206&isnumber=41 50630

3. Examples relating, inter alia pulsed modulation PHY

3.1 Pulsed Modulation PHY

The Pulsed Modulation (PM) PHY enables moderate data rates from 1 Mbit/s to some 100 Mbit/s. The main approach is to achieve high data rates by using a high optical clock rate (OCR) while keeping spectral efficiency low. This approach offers enhanced reach in applications where power efficiency is an issue, e.g. for uplink and Internet of Things (IoT). 2-Pulse-Amplitude Modulation (PAM) with 8B10B line coding and variable optical clock rate or M-ary PAM with Hadamard-Coded Modulation (HCM) are used, together with Reed-Solomon (RS) forward error correction (FEC). Controlled by higher layers, the PM PHY may include means to adapt the data rate and reliability of the link to varying channel conditions by i) varying the OCR, and/or ii) varying the modulation alphabet size M for PAM and the number of codes used in HCM and/or iii) selecting the most appropriate set of transmitters.

The numerology of the PM PHY is defined in Table 1, where only case i) is considered.

**Table 1 Numerology for Pulsed Modulation PHY**

| Opt. clock rate /MHz | Opt. clock cycle/ ns | $T_{seq}$/ns | $T_{CP}$/ns | $N_{seq}$/optical clock cycles | $N_{CP}$/optical clock cycles | MCS for payload | Data rate/ Mbit/s | Channel estimation sequence (Appendix |
|---|---|---|---|---|---|---|---|---|
| 6.25 | 160 | | | 32 | 1 | | 4.7 | $A_{32}$ |
| 12.5 | 80 | | | 64 | 2 | | 9.4 | $A_{64}$ |
| 25 | 40 | 5120 | 160 | 128 | 4 | 2-PAM | 19 | $A_{128}$ |
| 50 | 20 | | | 256 | 8 | 8B10B | 38 | $A_{256}$ |
| 100 | 10 | | | 512 | 16 | | 75 | $A_{512}$ |
| 200 | 5 | | | 1024 | 32 | RS(256,248) | 150 | $A_{1024}$ |

OCR in Table 1 are obtained from a common reference clock of 100 MHz available from low-cost off-the-shelf crystal oscillators by dividing e.g. the 100 MHz clock as 100 MHz/2" where n=-1...4. The reference clock can also be obtained via Ethernet using the precision time protocol (PTP) defined in IEEE std. 1588v2. Jitter can be improved by combining PTP with synchronous Ethernet (SynchE) defined in ITU-T rec. G.8262.

### 3.1.1 PPDU format

The PM PHY may use the PPDU format 310 shown in Figure 3.1. It may comprise a synchronization header (SHR) 311, physical layer header (PHR) 312 and PHY payload (PSDU) 313.

### 3.1.2 Transmission

### 3.1.2.1 Synchronization Header (SHR)

### 3.1.2.1.1 Preamble

The preamble 314 may enable both, cross- and autocorrelation with an appropriate window size [1-4].
The base sequence $A_N$, a specific pseudo-noise sequence of length N may be used, see Annex 1). $A_N$ may be repeated six times (or another number of times greater than four in other examples) yielding a total sequence length of 6*N. Each base sequence may be multiplied with positive or negative sign as given below which is known to create a sharper peak after autocorrelation, compared to a double sequence of the same total length [4]. The total preamble may read [$A_N$ $A_N$ $\underline{A}_N$ $A_N$ $\underline{A}_N$ $\underline{A}_N$] where x=1-x for elements of the sequence. The preamble may finally be passed through the 2-PAM Modulator.

**Table 2 Parametrization of PM PHY preamble and header (see 15-18-0190/r0)**

| Payload encoding | N | Preamble length | Header repetitions |
|---|---|---|---|
| 8B10B | 8 | 48 | 1 |
| HCM(1,4) | 16 | 96 | 4 |
| HCM(1,8) | 32 | 192 | 8 |
| HCM(1,16) | 64 | 394 | 16 |

### 3.1.2.1.2 Channel estimation

Channel estimation (CE) 315 may permit equalization and subsequent detection of header information and data. Although defined in the time domain, the CE sequence may allow frequency-domain equalization and hence comprise a base sequence and a cyclic prefix (CP). Measured in time units, the time durations of both, the base sequence $T_{seq}$ and the cyclic prefix $T_{CP}$, may be maintained, independent of the OCR. By increasing OCR, the number of clock cycles for the sequence and for the CP, i.e. $N_{seq}$ and $N_{CP}$, respectively, increase proportionally, see Table 1. As CE sequence, a specific pseudo-noise sequence $A_N$ given in Appendix 1) may be used having variable length $N=2^k$ (k=5...11), depending on the OCR so that $N=N_{seq}$ (see Table 1). The CE sequence may finally be passed through a 2-PAM modulator.

### 3.1.2.2 Physical Layer Header (PHR)

### 3.1.2.2.1 PHY header

The PHY header 316 may define the fields given in Table 3.

**Table 3 Fields in the PHY header**

| Field | Octet | Bits | Description |
|---|---|---|---|
| **Frame Type** | 0 | [7:0] | [0] FT<br>[1] High reliability MAC header<br>[7:2] reserved |
| **PSDU_length** | 1-2 | [15:0] | Length of PSDU in optical clock cycles |
| **MCS** | 3-6 | [31:0] | Modulation and Coding vector for PSDU |
| **Adaptive transmission** | 7 | [7:0] | [0] Adaptive enabled: : 0=off, 1=on<br>[1] CQI feedback enabled<br>[7:2] reserved |

(continued)

| Field | Octet | Bits | Description |
|---|---|---|---|
| **MIMO** | 9-10 | [15:0] | 0: MIMO enabled, 0=off, 1=on<br>1: **RS_type**<br>[7:2] $N_{RS}$ (Number of RS)<br>[12:8] **CS**<br>[15:13] reserved |
| **Relaying** | 8 | [7:0] | [0] Relaying enabled: 0=off, 1=on<br>[1] Relay mode: 0=AF, 1=DF[1]<br>[2] Relay duplex mode: 0=TD, 1=FD[2]<br>[7:3] reserved |
| *(1 : AF = amplify-and-forward, DF = decode-and-forward)*<br>*(2: TD = time division duplex, FD = full duplex)* | | | |

FT defines the frame types

FT=0    Probe frame (used as a beacon and for channel estimation)

FT=1    Transport frame (used for data, control and management messages)

The **PSDU length** scales from 0 up to *aMaxPHYFrameSize.*

**MCS** defines the used modulation and coding schemes. MCS is a number for single-stream transmission. For spatial multiplexing of streams send to different devices or to the same device having multiple receive branches, MCS is a vector where each element contains the MCS per stream being controlled by the MAC. If FT=0, then single-stream transmission is always used.

| Field | Octet | Bits | | Values |
|---|---|---|---|---|
| Stream 1 | 3 | [0] | reserved | reserved |
| | | [3:1] | Modulation | 0:2-PAM<br>...<br>3:16-PAM<br>>3: reserved |
| | | [7:4] | $N_{HCM}$ | 0: 8B10B is used<br>1: $N_{HCM}$=1<br>...<br>15: $N_{HCM}$=15 |
| Stream 2-4 | 4-6 | [31:8] | ... | ... |

**Table 4: Descriptor for MCS.**

**Adaptive transmission** allows the PM PHY to be operated in variable channel conditions by selecting an appropriate MCS according to the channel. The device can be configured to provide Channel Quality Indicator (CQI) feedback (For PM PHY, CQI feedback is defined as a 6 bit number measuring the value of CQI=SINR+10 dB, i.e. CQI=0: SINR <-10 dB; CQI=1: SINR=-9 dB ... CQI=63: SINR=+53 dB after in front of the FEC decoder. CQI feedback is computed at the receiver and sent by the MAC layer in a control message over the reverse link to the transmitter side).

When using MIMO, **RS_type** defines the use of time- or frequency-domain reference signals (RS) in the optional field. $N_{RS}$ is the number of RS in the optional field. The sequence index for the specific RS to be used is assigned to each transmitter through the PHY SAP.

**Table 5 Descriptors for MIMO**

| Field | Octet | Bits | Values |
|---|---|---|---|
| **RS_type** | 9-10 | [1] | 0: time domain<br>1: frequency domain |
| **CS** | 9-10 | [12:8] | CS=0 : Δ=1<br>...<br>CS=31: : Δ=32 |

**Relaying mode** specifies the mode of relaying operation (amplify-and-forward, decode-and forward). **Relay duplex mode** specifies the duplex mode for relaying (time- or full duplex).

3.1.2.2.2 HCS

The header check sequence (HCS) may use CRC-16 as defined in Annex C. The HCS bits may be be processed in the transmitted order. The registers may be be initialized to all ones.

3.1.2.2.3. Optional fields

Optional fields 318 may contain reference symbols (e.g., 131', 131") for multiple-input multiple-output (MIMO) channel estimation, for example. For MIMO RS, repetitions, FEC, line coding and HCS do not apply. MIMO RS can be defined in time- and frequency domain. The use of time- or frequency-domain RS is configurable via the MAC SAP. At lower OCR, typically, time-domain RS are appropriate. At higher OCR, frequency-domain RS apply.

3.1.2.2.3.1. Time-domain RS

Time-domain (TD) RSs are orthogonal in the time domain and constructed as follows.

For the $i^{th}$ data stream/transmitter, respectively, TD RS use the $i^{th}$ row of the NxN Hadamard matrix $\mathbf{H}_K$ where $N=N_{seq}=2^K$ according to Table 1. The value of i is used to identify the specific transmitter and defined by the MAC via the PHY SAP. Matrix $\mathbf{H}_K$ is obtained iteratively by incrementing k from k=1...K as

$$\mathbf{H}_0 = \begin{bmatrix} 1 \end{bmatrix} \; ; \; \mathbf{H}_k = \begin{bmatrix} \mathbf{H}_{k-1} & \mathbf{H}_{k-1} \\ \mathbf{H}_{k-1} & -\mathbf{H}_{k-1} \end{bmatrix}.$$

The resulting sequence is scrambled symbol-wise by logical XOR operation with the base sequence $\mathbf{A}_N$ after subtracting a constant value of 0.5 from $\mathbf{A}_N$. A cyclic prefix is finally inserted, with length $N_{CP}=N_{seq}/32$. (All sequences in $\mathbf{H}_K$ are mutually orthogonal. The XOR operation with $\mathbf{A}_N$ does not change the orthogonality of sequences but improves cross-correlation properties which is beneficial in case of multi-path [5, 6]. Note that the sequence for the first stream or transmitter just contains $\mathbf{A}_N$).

In examples, the communication device may:

- select a sequence out of a plurality of sets of mutually orthogonal sequences [e.g. a row or column of a Hadamard Matrix] in dependence on an index (i) identifying a specific device or a specific data stream or a specific transmitter [e.g. light emitter] [wherein the index is defined by MAC in the PHY SAP] and to derive the specific analog waveform ["individual reference signal"] from the selected row or column [for example, the index being conditioned by the optical clock reference and/or the number of transmitting communication devices in the set or streams to be transmitted in parallel]
- reduce a DC component in the selected row or column [e.g. by subtracting 0.5 from all values] when deriving the device-specific analog waveform from the selected row or column.
- combine [e.g. XOR-combine] the selected row or column with a base sequence [e.g. $A_N$] when deriving the specific analog waveform from the selected row or column
- configured to insert cyclic prefix to the sequence.

3.1.2.2.3.2. Frequency-domain RS

The following process may be performed by the signal generator 141 or 141a.

Frequency-domain (FD) RSs allow orthogonal detection of multiple data streams or signals from multiple transmitters and are orthogonal in the frequency domain. A specific comb of subcarriers identifies a particular stream or transmitter.

Construction of FD RS starts from the base sequence $A_L$ in Annex 1) where $L=N_{seq}/(2^*\Delta)$ according to Table 1 and comb spacing $\Delta$ is a power of 2. The value of $\Delta$ is defined by the MAC via the PHY SAP taking the fundamental relation $\Delta \leq N_{seq}/(2^*N_{CP})$ into account yielding. Following values of L are used for a given OCR.

**Table 6 Base sequence length L for FD RS depending on the OCR and the comb factor $\Delta$.**

| OCR/MHz | 6.25 | 12.5 | 25 | 50 | 100 | 200 |
|---|---|---|---|---|---|---|
| $N_{seq}$ | 32 | 64 | 128 | 256 | 512 | 1024 |
| $L(\Delta=1)$ | 16 | 32 | 64 | 128 | 256 | 512 |
| $L(\Delta=2)$ | 8 | 16 | 32 | 64 | 128 | 256 |
| $L(\Delta=4)$ | 4 | 8 | 16 | 32 | 64 | 128 |
| $L(\Delta=8)$ | 2 | 4 | 8 | 16 | 32 | 64 |
| $L(\Delta=16)$ | 1 | 2 | 4 | 8 | 16 | 32 |

1. A constant bias 0.5 is subtracted from $\mathbf{A}_L$,

2. $A_L$ is up-sampled by factor $\Delta$.

3. A cyclic shift by S samples applies to sequence Y yielding sequence Z. The sequence Z has length of $L_Z=L^*\Delta$ The value of S identifies the specific stream or transmitter and is defined by the MAC via the PHY SAP. The MAC layer may reserve the shift $S=\Delta-1$ for noise estimation at the receiver.

4. Sequence F is formed as follows $F=[0 \, \mathbf{Z}(1:L_Z-1) \, 0 \, Z(L_Z-1:-1:1)]$. This will implement Hermitian symmetry in the next step. Note that the first $L_Z-1$ samples from sequence Z are used twice, first in the original and then in the reversed order.

5. Finally, the sequence F is passed through an inverse fast Fourier transform (IFFT) which always yields a real-valued RS being specific for a given stream or transmitter.

By using a single RS, up to $\Delta-1$ streams or transmitters can be identified. The MAC layer will add more RSs via the PHY SAP for more streams or transmitters as indicated by $N_{RS}$ being a power of 2. In this way, up to $N_{RS}^*(\Delta-1)$ streams can be identified. Decompose the identifier of the $i^{th}$ stream or transmitter as $i=a^*(\Delta-1)+b$ where $b<\Delta-1$. The comb shift is then $S=b$ and the original RS is multiplied RS by RS with the entries in the $a^{th}$ row of the MxM Hadamard matrix $\mathbf{H}_K$ where $M=2^K$. $\mathbf{H}_K$ is obtained by incrementing k from k=1...K

$$\mathbf{H}_0 = \begin{bmatrix} 1 \end{bmatrix} \; ; \; \mathbf{H}_k = \begin{bmatrix} \mathbf{H}_{k-1} & \mathbf{H}_{k-1} \\ \mathbf{H}_{k-1} & -\mathbf{H}_{k-1} \end{bmatrix}.$$

In examples, the communication device may:

- select specific waveform [reference signal] out of a plurality of waveforms which are orthogonal in a frequency domain [e.g. associated with a transmitter, like a light emitter] [e.g., in dependence on the OCR; and/or the number of transmitting communication devices in the set or streams to be transmitted in parallel]; and/or
- perform both of the following actions:

  ○ select a pseudo noise sequence $A_L$ [also designated with $A_N$][for example, a Gold sequence] in dependence on OCR and number of [devices/links....], and
  ○ derive a set of spectral values from the selected pseudo noise sequence in order to derive the specific waveform from the OCR and/or the number of transmitting communication devices in the set or streams to be transmitted in parallel.

- use a pseudo noise sequence may be the sequence $A_L$ as in annex 1) and/or

- add a bias value to the sequence, to bring an average value closer to 0 [e.g turn a sequence having 0s and 1s into a sequence having -0.5s and +0.5s]; and/or
- insert zero values into the sequence in dependence on the information about number of transmitting communication devices in the set or streams to be transmitted in parallel [e.g. to thereby up-sample the sequence by a factor delta] [e.g. to increase number of values] [e.g. to obtain up-sampled sequence]; and/or
- cyclically shift up-sampled sequence, to adjust positions of non-zero values in a shifted version of the sequence in dependence on the identification number [in dependence on a value S identifying a specific stream or transmitter].

### 3.1.2.3. Header encoding and modulation

#### 3.1.2.3.1 General

The structure 320 in Fig. 3.2 applies to the transmission of the header. Scrambling 321 is optional to randomize uncoordinated interference. For improved error protection, the header can be repeated at 322 (duplicated). 8B10B line encoding 323 may apply to the header. Header encoding may use RS(36, 24) as defined below. According to [12, 13], a particular order of line and channel coding shown in Fig. 3.2 achieves lowest error rate. After FEC 324 (e.g., a Reed-Solomon FEC), only the systematic part of the binary output code word (24 bits) is well balanced. For maintaining a constant average light output for the entire sequence, also the redundant part of the binary code word (36-24=12 bits) may pass through 8B10B line encoder 325. Both parts may be concatenated in a multiplexer 326 and passed through a bit-to-symbol mapper 327 for 2-PAM modulation. Finally, a spatial pre-coder 328 may select what element (e.g., communication devices and/or transmitters, such a as LED emitters) will sent out the header and how.

#### 3.1.2.3.2 Scrambler 321

Scrambling can be defined by the MAC layer through the PHY SAP. If used, scrambling is based on a pseudo-random binary sequence (PRBS) being characteristic for a given data stream.

#### 3.1.2.3.3 Line Encoder 323

In the header the line encoder uses 8B10B code. For the 8B10B encoding, see ANSI/INCITS 373 and Appendix 3).

#### 3.1.2.3.4 RS(36, 24) code

For constructing the RS(36, 24) encoder and decoder, a symbol width of 10 is used, due to the output of 8B10B line coding. Accordingly, the generator polynomial $x^{10}+x^3+1$ is used. Scaling factor is 1 and generator start equal to 0.

#### 3.1.2.3.5 Bit-to-Symbol Mapping 327

Bit-to-symbol mapping is based on 2-PAM. Each input bit is mapped onto one symbol as {0, 1} to {0, 1}, respectively. A constant value of 0.5 is then subtracted to make the output DC free. Setting the modulation amplitude and the bias of the LED is due to the optical frontend.

#### 3.1.2.3.6 Spatial Precoder for the Header 328

The spatial precoder may be the same as for the payload, see section 3.1.2.4.7.

#### 3.1.2.4 PHY payload

#### 3.1.2.4.1 General

The structure 330 in Fig. 3.3 may apply to transmission of the payload, which besides data frames may also contain control and management information defined by the MAC layer.

Scrambling at 331 is optional to randomize uncoordinated interference. 8B10B line coding 332 may apply first. For FEC 333, the payload uses RS(256, 248) code as defined below. According to [12, 13], a particular order of line and channel coding achieves lowest error rates. After FEC, only the systematic part of the binary output code word (248 bits) is well balanced. For maintaining a constant average light output, also the redundant part of the binary code word (256-248=8 bits) may passe through 8B10B line encoder 335. Both parts may be concatenated in a multiplexer 336 and passed through the bit-to-symbol mapper 337 where 2-PAM is commonly used. In combination with Hadamard Coded Modulation (HCM) 337a other than the trivial mode HCM(1, 1), 8B10B line coding is not used while M-PAM with M≥2 can be used. A spatial precoder 338 may select finally what set of transmitters will sent out the payload and how. By varying the parameter M for PAM and the number of used codes in HCM, the pulsed modulation PHY can adapt the data rate to varying optical channel conditions.

### 3.1.2.4.2 Scrambler

Scrambling can be defined by the MAC layer through the PHY SAP. If used, scrambling is based on a pseudo-random binary sequence (PRBS) being characteristic for a given data stream.

### 3.1.2.4.3. RS(256, 248) code

For constructing the RS(256, 248) encoder and decoder, a symbol width of 10 is used, due to the output of 8B10B line coding. Accordingly, the generator polynomial $x^{10}+x^3+1$ is used. Scaling factor is 1 and generator start equal to 0.

### 3.1.2.4.4 Line Encoder

In combination with 2-PAM and HCM(1, 1), the line encoder uses 8B10B. For the 8B10B encoding, see ANSI/INCITS 373 and [3]. In case HCM is used in other than the trivial HCM(1, 1) mode, line coding is set to 1B1B, i.e. deactivated.

### 3.1.2.4.5. Bit-to-Symbol Mapper

The bit-to-symbol mapper is using PAM with 2 up to M levels. For 2 levels, each input bit is mapped in one symbol. The symbols are mapped to levels as {0, 1} to {0, 1}, respectively. With 4 levels, two consecutive bits are combined in a symbol. The symbols are mapped to levels as {00, 01, 10, 11} to { $0, \frac{1}{3}, \frac{2}{3}, 1$ }, respectively. With arbitrary M, symbols map to signal levels as { $0, \frac{1}{M-1}, \frac{2}{M-1}, \ldots, 1$ }. Gray mapping tables for M=2, 4, 8 and 16 are found in Annex 2). A constant value of 0.5 is always subtracted to make the mapper output DC free. Setting the modulation amplitude and the bias signal of the LED is due to the analogue optical frontend.

### 3.1.2.4.6. Hadamard Coded Modulation

Hadamard Coded Modulation (HCM) is an extension of the bit-to-symbol mapper. Besides removing the need for line coding, HCM allows the use of M-PAM with variable M, despite the high-pass characteristics of the channel, together with a variable number of codes.

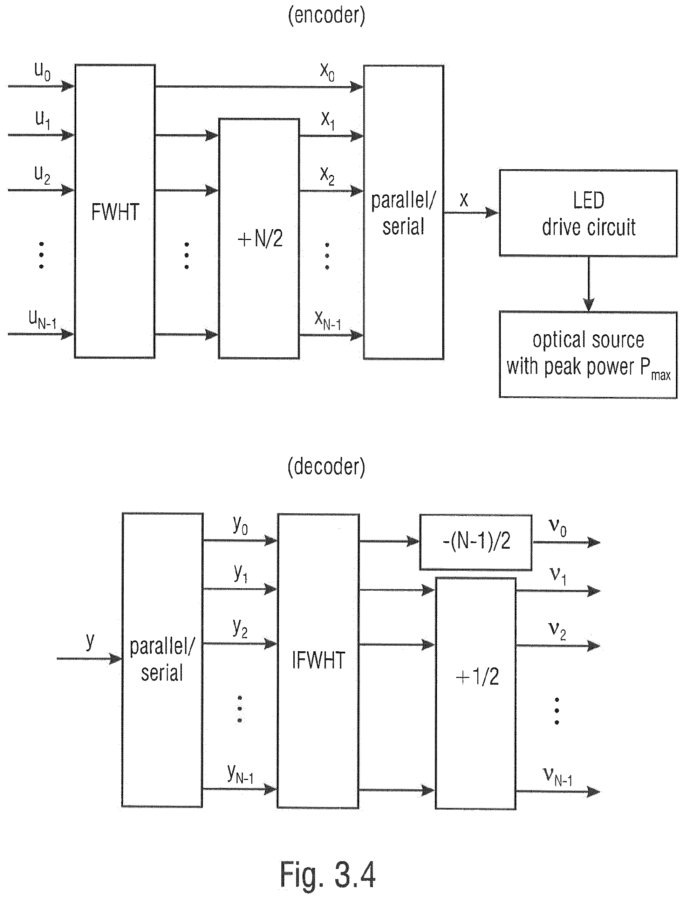

As shown in Fig. 3.4, HCM, multiples a vector of N data symbols (where N is a power of two) with a Hadamard matrix, denoted as fast Walsh-Hadamard transform (FWHT). As described in [8], the HCM signal $x = [x_0, x_1, \cdots, x_{N-1}]$ is generated from the data sequence

$$u = [u_0, u_1, \cdots, u_{N-1}]$$

as

$$x = H_N u + \overline{H_N} (1 - u),$$

where $H_N$ is the Hadamard matrix of order $N$ [9], and $\overline{H_N}$ is the complement of $H_N$. The complement of H is a binary matrix in which each element h of the matrix is replaced by 1-h. The components of $u$ are assumed to be modulated using M-PAM. DC is removed by setting $u_0 = 0$.

Table 2 lists possible transmission modes by combining line coding, FEC, HCM and OCR. In combination with Table 1, it is possible to obtain the data rate for each transmission mode. For instance, using RS(256,248) with 2-PAM, 8B10B and n=4 (6.25 MHz) yields 4.8 Mbit/s while using RS(256,248) with 16-PAM, m=15 for HCM and n=0 (100 MHz) yields 363 Mbit/s.

EP 3 669 469 B1

**Table 2 Transmission modes using combinations of M-PAM and Line Coding or HCM**

| PAM level/ spectral efficiency [bit/s/Hz] | FEC RS(n,k) | Line code | HCM | Optical Clock Rates/MHz | Data Rate/Mbps |
|---|---|---|---|---|---|
| 2/1 | (256, 248) for payload | 8B10B | (1,1) | 100/2" with n=-1...4 | use Table 1 for HCM(1,1) and take into account<br><br>i) spectral efficiency for M-PAM<br><br>ii) the appropriate code rate of the FEC<br><br>ii) overhead for HCM instead of 8B10B, see<br><br>**Fehler! Verweisquelle konnte nicht gefunden werden.** in Annex 3) |
| 2/1 | (36,24) for header | 1B1B | (1-15,16) | | |
| 4/2 | | | | | |
| 8/3 | | | | | |
| 16/4 | | | | | |

3.1.2.4.7 Spatial Precoder for the Payload

In general, the spatial precoder is a matrix-vector operation $\boldsymbol{P} \cdot \boldsymbol{x}$ operating symbol-wise when using time-domain RS and subcarrier-wise when using frequency-domain RS.

If **FT=0** (probe frame), the transmitter multiplies the 1x1 scalar stream of header symbols **x** with the $N_{ERS}$x1 vector **P** which contains all ones. All **transmitters (and/or communication devices) broadcast the same header information** (global transmission). The master coordinator in the infrastructure network sends the header information to all transmitters. All transmitters send in a synchronous manner. How to realize synchronization of multiple distributed OWC transmitters is out of scope for this standard.

If **FT=1** (transport frame), the transmitter multiplies the 1x1 stream of header information symbols x with the $N_{ERS}$x1 precoding vector **P** which contains ones for all active transmitters in a coordinated transmission cluster and zeros elsewhere. **All transmitters (and/or communication devices) in the cluster broadcast the same header information** (regional transmission). The master coordinator in the infrastructure network sends header information to all active transmitters in a coordinated transmission cluster. All transmitters send in a synchronous manner. How to realize synchronization of multiple distributed OWC transmitters is out of scope for this standard.

References

[1] T. M. Schmidl, D. C. Cox, "Robust frequency and timing synchronization for OFDM", IEEE Transactions on Communications, 1997.

[2] H. Minn, V. K. Bhargava, K. B. Letaief, "A robust timing and frequency synchronization for OFDM systems," in IEEE Transactions on Wireless Communications, vol. 2, no. 4, pp. 822-839, July 2003.

[3] M. Schellmann, V. Jungnickel, C. von Helmolt, "On the value of spatial diversity for the synchronization in MIMO-OFDM systems," IEEE 16th International Symposium on Personal, Indoor and Mobile Radio Communications, Berlin, 2005, pp. 201-205.

[4] K. Goroshko, K. Manolakis, L. Grobe, V. Jungnickel, "Low-latency synchronization for OFDM-based visible light communication," 2015 IEEE International Conference on Communication Workshop (ICCW), London, 2015, pp. 1327-1332.

[5] V. Jungnickel, Yun-Shen Chang, V. Pohl, "Performance of MIMO Rake receivers in WCDMA systems," IEEE Wireless Communications and Networking Conference (IEEE Cat. No.04TH8733), 2004, pp. 2075-2080 Vol.4.

[6] V. Jungnickel, H. Chen, V. Pohl, "A MIMO RAKE receiver with enhanced interference cancellation," IEEE 61st Vehicular Technology Conference, 2005, pp. 3137-3141 Vol. 5.

[7] V. Jungnickel, K. Manolakis, L. Thiele, T. Wirth, T. Haustein, "Handover Sequences for Interference-Aware Transmission in Multicell MIMO Networks, " Proceedings International ITG Workshop on Smart Antennas - WSA 2009, February 16-18, Berlin, Germany.

[8] M. Noshad, and M. Brandt-Pearce. "Hadamard-coded modulation for visible light communications." IEEE Transactions on Communications 64.3 (2016): 1167-1175.

[9] K. J. Horadam, Hadamard Matrices and Their Applications. Princeton University Press, 2006.

[10] https://mentor.ieee.org/802.15/dcn/17/15-17-0598-00-0013-generic-mac-for-coordinated-topology.ppt

[11] See http://application-notes.digchip.com/056/56-39724.pdf

[12] Raanan Ivry (BroadLight), "FEC and Line Coding for EFM", slide set, 12 October 2001.

[13] Jordi Oliveras Boada, "Forward error correction in optical Ethernet Communications", Ph.D. Thesis, Universitat Politècnica de Catalunya, Barcelona, June 2014

Annex 1) Pseudo-noise sequences AN

The following base sequences are the first from two mother sequences of length $N=2^k$ with $k=1...11$ usually used to form a set of Gold sequences.

$$\mathbf{A}_1 = [1]$$

$$\mathbf{A}_2 = [0\ 1]$$

$$\mathbf{A}_4 = [0\ 1\ 0\ 1]$$

$$\mathbf{A}_8 = [0\ 0\ 1\ 0\ 1\ 1\ 0\ 1]$$

$$\mathbf{A}_{16} = [0\ 0\ 0\ 1\ 0\ 1\ 0\ 0\ 1\ 1\ 0\ 1\ 1\ 1\ 0\ 1]$$

$$\mathbf{A}_{32} = [0\ 0\ 0\ 0\ 1\ 1\ 0\ 0\ 1\ 0\ 1\ 1\ 0\ 1\ 1\ 1\ 1\ 0\ 1\ 0\ 1\ 0\ 0\ 0\ 1\ 0\ 0\ 1\ 1\ 1\ 0\ 1]$$

$A_{64}$ = [0 0 0 0 0 1 0 1 0 1 0 0 1 1 0 0 1 0 0 0 1 0 0 1 0 1 1 0 1 1 0 0 0 1 1 1 0 1 0 0 0 0 1 1 0 1 0 1 1 1 0 0 1 1 1 1 0 1 1 1 1 0 1]

$A_{128}$ = [ 0 0 0 0 0 0 1 1 1 0 0 0 1 0 0 1 1 1 0 1 0 1 1 0 1 0 0 0 0 0 1 0 1 0 1 0 1 1 1 1 0 1 0 0 1 0 0 0 0 1 1 0 001101010 0110011110010010100010111001101110111111011011 00101100001000111101]

$\mathbf{A}_{256}$ = [ 0 0 0 0 0 0 0 1 1 0 1 1 1 1 0 1 0 1 1 0 0 0 0 0 1 0 1 0 1 0 1 0 0 0 1 1 1 1 1 0 0 1 1 1 0 1 0 1 0 0 1 1 0 0 1 1 0 1 0 0 0 0 0010000110010001000110101011010111011010010111 0011000110000111001001111011110100010100001001 0000 0 1 1 1 1 0 0 1 0 1 1 0 0 1 0 1 0 0 1 0 0 1 0 1 0 1 1 1 1 1 0 1 1 0 0 0 1 0 0 1 1 0 1 1 0 1 1 0 0 1 1 1 1 1 1 0 0 0 1 0 1 1 0 1110001110111111101001110000010111101]

$\mathbf{A}_{512}$ = [ 0 0 0 0 0 0 0 0 1 1 1 1 0 0 0 0 1 0 0 0 1 1 1 1 0 1 0 0 1 1 0 0 1 0 0 1 0 0 0 0 1 0 1 1 1 1 0 0 0 1 1 0 0111101101 11010100010100001101101000110001111110001000 10 110001010110101111101010101000001010010111110 01 0001001 00101001111101000100000111000011001011001010001110010111 01000000010110100111010110011 10 01111111001100110101001 10 1100000010010110110110010000001101001010111101011101 1000 10011010000100 1111001010101100011011110011011110110111111 10111011100110111000101010010011100011011010101110010 0 1 1000001100001110100100011010110101111101100110001011100000 100001111101]

$\mathbf{A}_{1024}$ = [0 0 0 0 0 0 0 0 0 1 1 1 0 0 0 1 1 1 0 1 1 0 0 0 1 0 0 1 1 0 1 0 1 0 0 0 1 0 0 0 0 1 0 1 0 1 1 1 0 0 0 0 101101010 11111010000000010101010100001011110001011011100 1101001010011000010100111001100000011010101100 11001101 0110000010110001111011100100110111010110010000100010101 0 0011001100010001000110001 01011 0001011110000100100011110 0111011010110100110010111011101001011010001011001110100 1 1111101011011 0100000100001110011100100010011110000110110 0011010011101111001000000011000111 0010101101011110111 101 1010010000010100011101000110111100000100101010111 0100001 0011000110000011111000110110101 0011 0100001101000111110 10 1001001100111100101001000101110101000000101110001100100 0 1101011100101111111 0011011011101111101100100101100 0011001 0101001111010001001011100111011000000010001110000111111 --> 00010010011101011011001101111001011011 00001000001110 10 1010010111101011111101001001000011 00 00111011100000010011 1100010100101011110011001001111100111111110010010010100 0 1010001111010101101 11101001101100111110111011011111101 1 11111110110110110010110010100000110011100000110111000100 00001111000111111101]

Annex 2) Gray codes for M-PAM

**Gray code for 2-PAM**

| Decimal | Binary | Gray |
|---------|--------|------|
| 0 | 0 | 0 |
| 1 | 1 | 1 |

**Gray code for 4-PAM**

| Decimal | Binary | Gray |
|---------|--------|------|
| 0 | 00 | 00 |
| 1 | 01 | 01 |
| 2 | 10 | 11 |
| 3 | 11 | 10 |

**Gray code for 8-PAM**

| Decimal | Binary | Gray |
|---------|--------|------|
| 0 | 000 | 0000 |
| 1 | 001 | 0001 |
| 2 | 010 | 0011 |
| 3 | 011 | 0010 |
| 4 | 100 | 0110 |
| 5 | 101 | 0111 |
| 6 | 110 | 0101 |
| 7 | 111 | 0100 |

**Gray code for 16-PAM**

| Decimal | Binary | Gray |
|---------|--------|------|
| 0 | 0000 | 0000 |
| 1 | 0001 | 0001 |
| 2 | 0010 | 0011 |
| 3 | 0011 | 0010 |
| 4 | 0100 | 0110 |
| 5 | 0101 | 0111 |
| 6 | 0110 | 0101 |
| 7 | 0111 | 0100 |
| 8 | 1000 | 1100 |
| 9 | 1001 | 1101 |
| 10 | 1010 | 1111 |
| 11 | 1011 | 1110 |
| 12 | 1100 | 1010 |
| 13 | 1101 | 1011 |
| 14 | 1110 | 1001 |
| 15 | 1111 | 1000 |

Annex 3) Overhead for HCM

Table 3 lists overheads for different values of Nin comparison to 8B10 line encoding. Although higher values of N could enable lower data rates, synchronization gets lost at these correspondingly low SNR levels. In such cases it is better to reduce the OCR. As a consequence, HCM($N_{HCM}$, 16) is used with variable number of codes transmitted in parallel $N_{HCM}$=1...15.

**Table 3 Over-head of HCM compared to 8B10B for different values of *N***

| HCM (N-1, N) | Overhead [%] |
|--------------|--------------|
| 2 | 50 |
| 4 | 25% |
| 8 | 12.5% |
| 16 | 6.25% |
| 32 | 3.2% |
| **8B10B** | 25% |

4. Further examples

Generally, examples may be implemented as a computer program product with program instructions, the program instructions being operative for performing one of the methods when the computer program product runs on a computer. The program instructions may for example be stored on a machine readable medium.

Other examples comprise the computer program for performing one of the methods described herein, stored on a machine readable carrier.

In other words, an example of method is, therefore, a computer program having a program instructions for performing one of the methods described herein, when the computer program runs on a computer.

A further example of the methods is, therefore, a data carrier medium (or a digital storage medium, or a computer-readable medium) comprising, recorded thereon, the computer program for performing one of the methods described herein. The data carrier medium, the digital storage medium or the recorded medium are tangible and/or non-transitionary, rather than signals which are intangible and transitory.

A further example of the method is, therefore, a data stream or a sequence of signals representing the computer program for performing one of the methods described herein. The data stream or the sequence of signals may for example be transferred via a data communication connection, for example via the Internet.

A further example comprises a processing means, for example a computer, or a programmable logic device performing one of the methods described herein.

A further example comprises a computer having installed thereon the computer program for performing one of the methods described herein.

A further example comprises an apparatus or a system transferring (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some examples, a programmable logic device (for example, a field programmable gate array) may be used to perform some or all of the functionalities of the methods described herein. In some examples, a field programmable gate array may cooperate with a microprocessor in order to perform one of the methods described herein. Generally, the methods may be performed by any appropriate hardware apparatus.

The above described examples are merely illustrative for the principles discussed above. It is understood that modifications and variations of the arrangements and the details described herein will be apparent. It is the intent, therefore, to be limited by the scope of the impending claims and not by the specific details presented by way of description and explanation of the examples herein.

**Claims**

1. A communication device (110, 120, 214, 216) for communicating with a plurality of other communication devices (110, 120, 214, 216), using an optical wireless link (218), wherein the communication device is an optical communication device,
   wherein the communication device is configured to:

   provide individual reference signals (131', 131", 142) using a number of subcarriers ($S_1$-$S_8$) or time slots in accordance to:

   the optical clock reference (143) which is a clock reference selected among a collection of predefined optical clock references, so that the faster the optical clock reference, the more subcarriers; and
   the number (144) of transmitting communication devices in a set of transmitting communication devices or streams to be transmitted in parallel, so that the more communication devices, the more space between the subcarriers to leave the space for the subcarrier of the other devices;

   shift the position of subcarriers or of signals at the time slots by a number of positions which is derived by an identification number (145) associated to an individual communication device within the whole set of transmitting communication devices or in dependence on an identification number (145) identifying a specific stream or transmitter;
   transmit the reference signal which enables the plurality of receiving communication devices to identify the reference signal (142) coming from the individual communication device in the whole set of communication devices or being associated with a specific stream or transmitter.

2. The device of claim 1, wherein at least one reference signal is configured so that

   a header (312) includes a specific analog waveform associated with the device or a data stream or a transmitter while the rest of the header is transmitted using a common modulation format shared between different devices, wherein the device is configured to transmit different specific analog waveforms using different transmitters.

3. The device of any of the preceding claims, configured to select a specific waveform out of a plurality of waveforms which are orthogonal in a time domain, and transmit the specific analog waveform associated with a data stream or a transmitter.

4. The device of any of the preceding claims, configured to
select a sequence out of a plurality of sets of mutually orthogonal sequences in dependence on an index (i) identifying a specific device or a specific data stream or a specific transmitter and to derive the specific analog waveform from the selected row or column of a Hadamard matrix,

5. The device of claim 6, wherein the set of mutually orthogonal sequences is associated to a Hadamard Matrix, wherein the Hadamard Matrix is defined as

$$\mathbf{H}_0 = \begin{bmatrix} 1 \end{bmatrix} \; ; \; \mathbf{H}_k = \begin{bmatrix} \mathbf{H}_{k-1} & \mathbf{H}_{k-1} \\ \mathbf{H}_{k-1} & -\mathbf{H}_{k-1} \end{bmatrix} ,$$

6. The device of claim 5, configured to
reduce a DC component in the selected row or column when deriving the device-specific analog waveform from the selected row or column and/or combine the selected row or column with a base sequence when deriving the specific analog waveform from the selected row or column.

7. The device of any of the preceding claims, configured to obtain a time-domain signal which is orthogonal in the time domain to a time domain signal provided by another device or to a time domain signal associated with a different index.

8. The device of any of the preceding claims, configured to select specific waveform out of a plurality of waveforms which are orthogonal in a frequency domain.

9. The device of any of the preceding claims, configured to select a pseudo noise sequence in dependence on the optical clock reference and the number of communication devices and/or transmitters and/or streams, and
derive a set of spectral values from the selected pseudo noise sequence in order to derive the specific waveform from the optical clock reference and/or the number of transmitting communication devices in the set or streams to be transmitted in parallel.

10. The device of any of the preceding claims, configured to add a bias value to the sequence, to bring an average value closer to 0, and/or insert zero values into the sequence in dependence on the information about number of transmitting communication devices in the set or streams to be transmitted in parallel and/or cyclically shift applied to up-sampled sequence, to adjust positions of non-zero values in a shifted version of the sequence in dependence on the identification number.

11. The device of any of the preceding claims, configured to:
obtain, from a sequence of spectral values by concatenating the up-sampled and cyclically shifted sequence and/or a reversed version thereof, a sequence of spectral values to be used to derive the specific analog waveform and perform an IFFT to derive the specific analog waveform,

12. The device of any of the preceding claims, wherein the number (144) of transmitting communication devices in the set of transmitting communication devices or streams to be transmitted in parallel is associated to a comb factor ($\Delta$) which defines the relative positions between the subcarriers.

13. The device of any of the preceding claims, wherein the communication device is a visible light communication, VLC, device and/or comprising at least one photodiode or a laser diode to transmit wireless signals.

14. A method for performing a communication for communicating with a plurality of other communication devices, using an optical wireless link, comprising:

providing individual reference signals using a number of subcarriers or time slots in accordance to:

an optical clock reference (143), which is a clock reference selected among a collection of predefined optical clock references, so that the faster the optical clock reference, the more subcarriers; and
the number (144) of transmitting communication devices in the set of communication devices or streams to be transmitted in parallel, so that the more communication devices, the more space between the subcarriers to leave the space for the subcarrier of the other devices;

shifting the position of subcarriers or of signals at the time slots by a number of positions which is derived from an identification number associated to an individual communication device within the whole set of transmitting communication devices or in dependence on an identification number identifying a specific stream or transmitter; transmitting the reference signal which enables the plurality of receiving communication devices to identify the reference signal coming from the individual communication device in the whole set of communication devices or being associated with a specific stream or transmitter.

15. A non-transitory memory unit which stores instruction which, when executed by the device of claim 1, cause the processor to perform a computer-implemented method for performing a communication for communicating with a plurality of other communication devices, using an optical wireless link, the computer-implemented method comprising:

providing individual reference signals using a number of subcarriers or time slots in accordance to:

an optical clock reference (143), which is a clock reference selected among a collection of predefined optical clock references, so that the faster the optical clock reference, the more subcarriers; and the number (144) of transmitting communication devices in the set of communication devices or streams to be transmitted in parallel, so that the more communication devices, the more space between the subcarriers to leave the space for the subcarrier of the other devices;

shifting the position of subcarriers or of signals at the time slots by a number of positions which is derived from an identification number associated to an individual communication device within the whole set of transmitting communication devices or in dependence on an identification number identifying a specific stream or transmitter; controlling the transmission of the reference signal which enables the plurality of receiving communication devices to identify the reference signal coming from the individual communication device in the whole set of communication devices or being associated with a specific stream or transmitter.

**Patentansprüche**

1. Kommunikationsvorrichtung (110, 120, 214, 216) zum Kommunizieren mit einer Mehrzahl von anderen Kommunikationsvorrichtungen (110, 120, 214, 216) unter Verwendung einer optischen drahtlosen Verbindung (218), wobei die Kommunikationsvorrichtung eine optische Kommunikationsvorrichtung ist, wobei die Kommunikationsvorrichtung konfiguriert ist zum:

Bereitstellen einzelner Referenzsignale (131', 131", 142) unter Verwendung einer Anzahl von Unterträgern ($S_1$-$S_8$) oder Zeitschlitzen gemäß:

der optischen Taktreferenz (143), die eine Taktreferenz ist, die aus einer Sammlung von vordefinierten optischen Taktreferenzen ausgewählt ist, so dass je schneller die optische Taktreferenz ist, desto mehr Unterträger; und der Anzahl (144) von sendenden Kommunikationsvorrichtungen in einer Menge von sendenden Kommunikationsvorrichtungen oder Strömen, die parallel zu senden sind, so dass je mehr Kommunikationsvorrichtungen, desto mehr Raum zwischen den Unterträgern, um den Raum für den Unterträger der anderen Vorrichtungen zu lassen;

Verschieben der Position von Unterträgern oder von Signalen an den Zeitschlitzen um eine Anzahl von Positionen, die durch eine Identifikationszahl (145) abgeleitet wird, die einer einzelnen Kommunikationsvorrichtung innerhalb der gesamten Menge von sendenden Kommunikationsvorrichtungen zugeordnet ist, oder in Abhängigkeit von einer Identifikationszahl (145), die einen spezifischen Strom oder Sender identifiziert; Senden des Referenzsignals, das es der Mehrzahl von empfangenden Kommunikationsvorrichtungen ermöglicht, das Referenzsignal (142) zu identifizieren, das von der einzelnen Kommunikationsvorrichtung in der gesamten Menge von Kommunikationsvorrichtungen kommt oder einem spezifischen Strom oder Sender zugeordnet ist.

2. Vorrichtung gemäß Anspruch 1, wobei mindestens ein Referenzsignal so konfiguriert ist, dass

ein Header (312) einen spezifischen analogen Signalverlauf enthält, der der Vorrichtung oder einem Datenstrom oder einem Sender zugeordnet ist, während der Rest des Headers unter Verwendung eines gemeinsamen Modulationsformats gesendet wird, das von verschiedenen Vorrichtungen gemeinsam genutzt wird, wobei die Vorrichtung dazu konfiguriert ist, unterschiedliche spezifische analoge Signalverläufe unter Verwendung verschiedener Sender zu senden.

3. Vorrichtung gemäß einem der vorhergehenden Ansprüche, die dazu konfiguriert ist, einen spezifischen Signalverlauf aus einer Mehrzahl von Signalverläufen auszuwählen, die in einem Zeitbereich orthogonal sind, und den spezifischen analogen Signalverlauf zu senden, der einem Datenstrom oder einem Sender zugeordnet ist.

4. Vorrichtung gemäß einem der vorhergehenden Ansprüche, die dazu konfiguriert ist, eine Sequenz aus einer Mehrzahl von Mengen von zueinander orthogonalen Sequenzen in Abhängigkeit von einem Index (i) auszuwählen, der eine spezifische Vorrichtung oder einen spezifischen Datenstrom oder einen spezifischen Sender identifiziert, und den spezifischen analogen Signalverlauf aus der ausgewählten Zeile oder Spalte einer Hadamard-Matrix abzuleiten.

5. Vorrichtung gemäß Anspruch 6, wobei die Menge von zueinander orthogonalen Sequenzen einer Hadamard-Matrix zugeordnet ist, wobei die Hadamard-Matrix definiert ist als

$$\mathbf{H}_0 = \begin{bmatrix} 1 \end{bmatrix} \ ; \ \mathbf{H}_k = \begin{bmatrix} \mathbf{H}_{k-1} & \mathbf{H}_{k-1} \\ \mathbf{H}_{k-1} & -\mathbf{H}_{k-1} \end{bmatrix}.$$

6. Vorrichtung gemäß Anspruch 5, die dazu konfiguriert ist, eine DC-Komponente in der ausgewählten Zeile oder Spalte zu reduzieren, wenn der vorrichtungsspezifische analoge Signalverlauf aus der ausgewählten Zeile oder Spalte abgeleitet wird, und/oder die ausgewählte Zeile oder Spalte mit einer Basissequenz zu kombinieren, wenn der spezifische analoge Signalverlauf aus der ausgewählten Zeile oder Spalte abgeleitet wird.

7. Vorrichtung gemäß einem der vorhergehenden Ansprüche, die dazu konfiguriert ist, ein Zeitbereichssignal zu erhalten, das in dem Zeitbereich orthogonal zu einem Zeitbereichssignal ist, das durch eine andere Vorrichtung bereitgestellt wird, oder zu einem Zeitbereichssignal, das einem unterschiedlichen Index zugeordnet ist.

8. Vorrichtung gemäß einem der vorhergehenden Ansprüche, die dazu konfiguriert ist, einen spezifischen Signalverlauf aus einer Mehrzahl von Signalverläufen auszuwählen, die in einem Frequenzbereich orthogonal sind.

9. Vorrichtung gemäß einem der vorhergehenden Ansprüche, die dazu konfiguriert ist, eine Pseudorauschsequenz in Abhängigkeit von der optischen Taktreferenz und der Anzahl von Kommunikationsvorrichtungen und/oder Sendern und/oder Strömen auszuwählen, und eine Menge von Spektralwerten aus der ausgewählten Pseudorauschsequenz abzuleiten, um den spezifischen Signalverlauf aus der optischen Taktreferenz und/oder der Anzahl von sendenden Kommunikationsvorrichtungen in der Menge oder Strömen, die parallel zu senden sind, abzuleiten.

10. Vorrichtung gemäß einem der vorhergehenden Ansprüche, die dazu konfiguriert ist, einen Bias-Wert zu der Sequenz hinzuzufügen, um einen Mittelwert näher an 0 zu bringen, und/oder Nullwerte in die Sequenz einzufügen, in Abhängigkeit von den Informationen über die Anzahl von sendenden Kommunikationsvorrichtungen in der Menge oder Strömen, die parallel zu senden sind, und/oder zyklisch zu verschieben, angewendet auf eine aufwärtsabgetastete Sequenz, um Positionen von Nicht-Null-Werten in einer verschobenen Version der Sequenz in Abhängigkeit von der Identifikationszahl anzupassen.

11. Vorrichtung gemäß einem der vorhergehenden Ansprüche, die dazu konfiguriert ist: aus einer Sequenz von Spektralwerten durch Verketten der aufwärtsabgetasteten und zyklisch verschobenen Sequenz und/oder einer umgekehrten Version davon eine Sequenz von Spektralwerten zu erhalten, die zu verwenden sind, um den spezifischen analogen Signalverlauf abzuleiten, und eine IFFT durchzuführen, um den spezifischen analogen Signalverlauf abzuleiten.

12. Vorrichtung gemäß einem der vorhergehenden Ansprüche, wobei die Anzahl (144) von sendenden Kommunikationsvorrichtungen in der Menge von sendenden Kommunikationsvorrichtungen oder Strömen, die parallel zu senden sind, einem Kammfaktor (Δ) zugeordnet ist, der die relativen Positionen zwischen den Unterträgern definiert.

**13.** Vorrichtung gemäß einem der vorhergehenden Ansprüche, wobei die Kommunikationsvorrichtung eine Kommunikationsvorrichtung für sichtbares Licht, VLC-Vorrichtung, ist und/oder mindestens eine Fotodiode oder eine Laserdiode umfasst, um drahtlose Signale zu senden.

**14.** Verfahren zum Durchführen einer Kommunikation zum Kommunizieren mit einer Mehrzahl von anderen Kommunikationsvorrichtungen unter Verwendung einer optischen drahtlosen Verbindung, das folgende Schritte aufweist:

Bereitstellen einzelner Referenzsignale unter Verwendung einer Anzahl von Unterträgern oder Zeitschlitzen gemäß:

einer optischen Taktreferenz (143), die eine Taktreferenz ist, die aus einer Sammlung von vordefinierten optischen Taktreferenzen ausgewählt ist, so dass je schneller die optische Taktreferenz ist, desto mehr Unterträger; und
der Anzahl (144) von sendenden Kommunikationsvorrichtungen in der Menge von Kommunikationsvorrichtungen oder Strömen, die parallel zu senden sind, so dass je mehr Kommunikationsvorrichtungen, desto mehr Raum zwischen den Unterträgern, um den Raum für den Unterträger der anderen Vorrichtungen zu lassen;

Verschieben der Position von Unterträgern oder von Signalen an den Zeitschlitzen um eine Anzahl von Positionen, die von einer Identifikationszahl abgeleitet wird, die einer einzelnen Kommunikationsvorrichtung innerhalb der gesamten Menge von sendenden Kommunikationsvorrichtungen zugeordnet ist, oder in Abhängigkeit von einer Identifikationszahl, die einen spezifischen Strom oder Sender identifiziert;
Senden des Referenzsignals, das es der Mehrzahl von empfangenden Kommunikationsvorrichtungen ermöglicht, das Referenzsignal zu identifizieren, das von der einzelnen Kommunikationsvorrichtung in der gesamten Menge von Kommunikationsvorrichtungen kommt oder einem spezifischen Strom oder Sender zugeordnet ist.

**15.** Nichtflüchtige Speichereinheit, die Befehle speichert, die, wenn sie durch die Vorrichtung gemäß Anspruch 1 ausgeführt werden, den Prozessor dazu veranlassen, ein computerimplementiertes Verfahren zum Durchführen einer Kommunikation zum Kommunizieren mit einer Mehrzahl von anderen Kommunikationsvorrichtungen unter Verwendung einer optischen drahtlosen Verbindung durchzuführen, wobei das computerimplementierte Verfahren folgende Schritte aufweist:

Bereitstellen einzelner Referenzsignale unter Verwendung einer Anzahl von Unterträgern oder Zeitschlitzen gemäß:

einer optischen Taktreferenz (143), die eine Taktreferenz ist, die aus einer Sammlung von vordefinierten optischen Taktreferenzen ausgewählt ist, so dass je schneller die optische Taktreferenz ist, desto mehr Unterträger; und
der Anzahl (144) von sendenden Kommunikationsvorrichtungen in der Menge von Kommunikationsvorrichtungen oder Strömen, die parallel zu senden sind, so dass je mehr Kommunikationsvorrichtungen, desto mehr Raum zwischen den Unterträgern, um den Raum für den Unterträger der anderen Vorrichtungen zu lassen;

Verschieben der Position von Unterträgern oder von Signalen an den Zeitschlitzen um eine Anzahl von Positionen, die von einer Identifikationszahl abgeleitet wird, die einer einzelnen Kommunikationsvorrichtung innerhalb der gesamten Menge von sendenden Kommunikationsvorrichtungen zugeordnet ist, oder in Abhängigkeit von einer Identifikationszahl, die einen spezifischen Strom oder Sender identifiziert;
Steuern der Sendung des Referenzsignals, das es der Mehrzahl von empfangenden Kommunikationsvorrichtungen ermöglicht, das Referenzsignal zu identifizieren, das von der einzelnen Kommunikationsvorrichtung in der gesamten Menge von Kommunikationsvorrichtungen kommt oder einem spezifischen Strom oder Sender zugeordnet ist.

**Revendications**

**1.** Dispositif de communication (110, 120, 214, 216) destiné à communiquer avec une pluralité d'autres dispositifs de communication (110, 120, 214, 216), à l'aide d'une liaison optique sans fil (218), dans lequel le dispositif de communication est un dispositif de communication optique,

dans lequel le dispositif de communication est configuré pour :

fournir des signaux de référence individuels (131', 131", 142) en utilisant un certain nombre de sous-porteuses ($S_1$-$S_8$) ou d'intervalles de temps conformément :

à la référence d'horloge optique (143) qui est une référence d'horloge sélectionnée parmi une collecte de références d'horloge optique prédéfinies, de telle sorte que plus la référence d'horloge optique est rapide, plus il y a de sous-porteuses ; et

au nombre (144) de dispositifs de communication émetteurs dans un ensemble de dispositifs de communication émetteurs ou de flux à émettre en parallèle, de telle sorte que plus il y a de dispositifs de communication, plus il y a d'espace entre les sous-porteuses pour laisser l'espace pour la sous-porteuse des autres dispositifs ;

décaler la position de sous-porteuses ou de signaux au niveau des intervalles de temps d'un nombre de positions qui est dérivé d'un numéro d'identification (145) associé à un dispositif de communication individuel dans l'ensemble entier de dispositifs de communication émetteurs ou en fonction d'un numéro d'identification (145) identifiant un flux ou émetteur spécifique ;

émettre le signal de référence qui permet à la pluralité de dispositifs de communication récepteurs d'identifier le signal de référence (142) provenant du dispositif de communication individuel dans l'ensemble entier de dispositifs de communication ou étant associé à un flux ou émetteur spécifique.

2. Dispositif selon la revendication 1, dans lequel au moins un signal de référence est configuré de telle sorte qu'un en-tête (312) inclut une forme d'onde analogique spécifique associée au dispositif ou à un flux de données ou à un émetteur alors que le reste de l'en-tête est émis en utilisant un format de modulation commune partagé entre différents dispositifs,

dans lequel le dispositif est configuré pour émettre différentes formes d'onde analogiques spécifiques en utilisant différents émetteurs.

3. Dispositif selon l'une quelconque des revendications précédentes, configuré pour sélectionner une forme d'onde spécifique parmi une pluralité de formes d'onde qui sont orthogonales dans un domaine temporel, et émettre la forme d'onde analogique spécifique associée à un flux de données ou à un émetteur.

4. Dispositif selon l'une quelconque des revendications précédentes, configuré pour
sélectionner une séquence parmi une pluralité d'ensembles de séquences mutuellement orthogonales en fonction d'un indice (i) identifiant un dispositif spécifique ou un flux de données spécifique ou un émetteur spécifique et pour dériver la forme d'onde analogique spécifique à partir de la rangée ou colonne sélectionnée d'une matrice Hadamard.

5. Dispositif selon la revendication 6, dans lequel l'ensemble de séquences mutuellement orthogonales est associé à une matrice Hadamard, dans lequel la matrice Hadamard est définie par

$$H_0 = \begin{bmatrix} 1 \end{bmatrix} \; ; \; H_k = \begin{bmatrix} H_{k-1} & H_{k-1} \\ H_{k-1} & -H_{k-1} \end{bmatrix}.$$

6. Dispositif selon la revendication 5, configuré pour
réduire une composante CC dans la rangée ou colonne sélectionnée lors de la dérivation de la forme d'onde analogique spécifique au dispositif à partir de la rangée ou colonne sélectionnée et/ou combiner la rangée ou colonne sélectionnée à une séquence de base lors de la dérivation de la forme d'onde analogique spécifique à partir de la rangée ou colonne sélectionnée.

7. Dispositif selon l'une quelconque des revendications précédentes, configuré pour obtenir un signal de domaine temporel qui est orthogonal dans le domaine temporel à un signal de domaine temporel fourni par un autre dispositif ou à un signal de domaine temporel associé à un indice différent.

8. Dispositif selon l'une quelconque des revendications précédentes, configuré pour sélectionner une forme d'onde spécifique parmi une pluralité de formes d'onde qui sont orthogonales dans un domaine fréquentiel.

9. Dispositif selon l'une quelconque des revendications précédentes, configuré pour sélectionner une séquence de pseudo-bruit en fonction de la référence d'horloge optique et du nombre de dispositifs de communication et/ou d'émetteurs et/ou de flux, et

   dériver un ensemble de valeurs spectrales de la séquence de pseudo-bruit sélectionnée afin de dériver la forme d'onde spécifique de la référence d'horloge optique et/ou du nombre de dispositifs de communication émetteurs dans l'ensemble ou de flux à émettre en parallèle.

10. Dispositif selon l'une quelconque des revendications précédentes, configuré pour ajouter une valeur de polarisation à la séquence, pour rapprocher une valeur de moyenne de 0 et/ou insérer des valeurs nulles dans la séquence en fonction des informations concernant le nombre de dispositifs de communication émetteurs dans l'ensemble ou de flux à émettre en parallèle et/ou appliquer un décalage cyclique à la séquence suréchantillonnée, pour ajuster des positions de valeurs non nulles dans une version décalée de la séquence en fonction du numéro d'identification.

11. Dispositif selon l'une quelconque des revendications précédentes, configuré pour :

    obtenir, à partir d'une séquence de valeurs spectrales par concaténation de la séquence suréchantillonnée et décalée de manière cyclique et/ou d'une version inversée de celle-ci, une séquence de valeurs spectrales à utiliser pour dériver la forme d'onde analogique spécifique et effectuer une IFFT pour dériver la forme d'onde analogique spécifique.

12. Dispositif selon l'une quelconque des revendications précédentes, dans lequel le nombre (144) de dispositifs de communication émetteurs dans l'ensemble de dispositifs de communication émetteurs ou de flux à émettre en parallèle est associé à un facteur de peigne (Δ) qui définit les positions relatives entre les sous-porteuses.

13. Dispositif selon l'une quelconque des revendications précédentes, dans lequel le dispositif de communication est un dispositif de communication par lumière visible, VLC, et/ou comprenant au moins une photodiode ou une diode laser pour émettre des signaux sans fil.

14. Procédé de réalisation d'une communication pour communiquer avec une pluralité d'autres dispositifs de communication, à l'aide d'une liaison optique sans fil, comprenant le fait de :

    fournir des signaux de référence individuels en utilisant un certain nombre de sous-porteuses ou d'intervalles de temps conformément :

    à une référence d'horloge optique (143), qui est une référence d'horloge sélectionnée parmi une collecte de références d'horloge optique prédéfinies, de telle sorte que plus la référence d'horloge optique est rapide, plus il y a de sous-porteuses ; et
    au nombre (144) de dispositifs de communication émetteurs dans l'ensemble de dispositifs de communication émetteurs ou de flux à émettre en parallèle, de telle sorte que plus il y a de dispositifs de communication, plus il y a d'espace entre les sous-porteuses pour laisser l'espace pour la sous-porteuse des autres dispositifs ;

    décaler la position de sous-porteuses ou de signaux au niveau des intervalles de temps d'un nombre de positions qui est dérivé d'un numéro d'identification associé à un dispositif de communication individuel dans l'ensemble entier de dispositifs de communication émetteurs ou en fonction d'un numéro d'identification identifiant un flux ou émetteur spécifique ;
    émettre le signal de référence qui permet à la pluralité de dispositifs de communication récepteurs d'identifier le signal de référence provenant du dispositif de communication individuel dans l'ensemble entier de dispositifs de communication ou étant associé à un flux ou émetteur spécifique.

15. Unité de mémoire non transitoire qui stocke des instructions qui, lorsqu'elles sont exécutées par le dispositif de la revendication 1, amènent le processeur à réaliser un procédé mis en œuvre par ordinateur pour réaliser une communication pour communiquer avec une pluralité d'autres dispositifs de communication, à l'aide d'une liaison optique sans fil, le procédé mis en œuvre par ordinateur comprenant le fait de :

    fournir des signaux de référence individuels en utilisant un certain nombre de sous-porteuses ou d'intervalles de temps conformément :

    à une référence d'horloge optique (143), qui est une référence d'horloge sélectionnée parmi une collecte de références d'horloge optique prédéfinies, de telle sorte que plus la référence d'horloge optique est rapide, plus il y a de sous-porteuses ; et

au nombre (144) de dispositifs de communication émetteurs dans l'ensemble de dispositifs de communication émetteurs ou de flux à émettre en parallèle, de telle sorte que plus il y a de dispositifs de communication, plus il y a d'espace entre les sous-porteuses pour laisser l'espace pour la sous-porteuse des autres dispositifs ;

décaler la position de sous-porteuses ou de signaux au niveau des intervalles de temps d'un nombre de positions qui est dérivé d'un numéro d'identification associé à un dispositif de communication individuel dans l'ensemble entier de dispositifs de communication émetteurs ou en fonction d'un numéro d'identification identifiant un flux ou émetteur spécifique ;

commander l'émission du signal de référence qui permet à la pluralité de dispositifs de communication récepteurs d'identifier le signal de référence provenant du dispositif de communication individuel dans l'ensemble entier de dispositifs de communication ou étant associé à un flux ou émetteur spécifique.

Fig. 1.1

Fig. 1.2

Fig. 1.3

140
(110, 120, 214, 216...)

141

143
optical clock
reference (OCR)

144 (D)
number of transmitting
comm. devices or transmitters
(e.g., LED emitters) or streams

signal
generator

142
signal
(e.g., reference signal
and/or comb-like
signal)

145 (S)
ID number of the transmitting
comm. device, or transmitter
(e.g., LED emitter) or stream

Fig. 1.4

Fig. 1.4a

OCR, $A_L$, $\Delta$, S are obtained ~151

A constant bias 0.5 is subtracted from $A_L$ ~152

$A_L$ is up-sampled by factor $\Delta$ ~153

A cyclic shift by S samples applies
to sequence Y yielding sequence Z ~154

Sequence F is formed as follows
$F = [0 \; z(1{:}L_Z{-}1) \; 0 \; z(L_L{-}1{:}{-}1{:}1)]$ ~155

The sequence F is passed through
an inverse fast Fourier transform (IFFT)
which yields a real-valued RS being
specific for a given stream or transmitter ~156

150

Fig. 1.5

A

172          171          173
(131', 131", 142)

Fig. 1.6

111

210

212

214
(110)

214 (110)

214
(110)

217 (115)

218 (113)

216
(110)

216
(110)

216
(110)

219 (113, 115)

Fig. 2.1

42

221

| RX \ TX | REP1 | REP2 | REP3 |
|---|---|---|---|
| EP1 | X | X | |
| EP2 | | X | X |
| EP3 | | X | X |

222

| RX \ TX | EP1 | EP2 | EP3 |
|---|---|---|---|
| REP1 | X | | |
| REP2 | X | X | X |
| REP3 | | | X |

Fig. 2.2

230

| RX \ TX | REP1 | REP2 | REP3 | EP1 | EP2 | EP3 |
|---|---|---|---|---|---|---|
| REP1 | | X | | X | X | |
| REP2 | | | X | | X | |
| REP3 | | | | | | X |
| EP1 | | X | | | | |
| EP2 | X | X | X | | | |
| EP3 | | | X | | X | |

Fig. 2.3

Fig. 2.4

global transmission                                    251

| REP1 | preamble | channel estimation | physical layer header | global payload |
| REP2 | preamble | channel estimation | physical layer header | global payload |
| REP3 | preamble | channel estimation | physical layer header | global payload |
| REP4 | preamble | channel estimation | physical layer header | global payload |

time

252   regional transmission (cluster), orthogonal in space or time, example for spatial orthogonality

| REP1 | cluster A preamble | cluster A channel estimation | cluster A PHY header | cluster A payload |
| REP2 | cluster A preamble | cluster A channel estimation | cluster A PHY header | cluster A payload |
| REP3 | cluster B preamble | cluster B channel estimation | cluster B PHY header | cluster B payload |
| REP4 | cluster B preamble | cluster B channel estimation | cluster B PHY header | cluster B payload |

cluster A  orthogonal in space
clusterB

time

example for orthogonality

cluster A                                              cluster B

| REP1 | cluster A preamble | cluster A channel estimation | cluster A PHY header | cluster A payload | REP3 | cluster B preamble | cluster B channel estimation | cluster B PHY header | cluster B payload |
| REP2 | cluster A preamble | cluster A channel estimation | cluster A PHY header | cluster A payload | REP4 | cluster B preamble | cluster B channel estimation | cluster B PHY header | cluster B payload |

orthogonal in time                                    time

253   local transmission (1 REP   1 EP)

| REP1 | REP1 preamble | REP1 channel estimation | REP1 physical layer header | REP1 payload |
| REP2 | REP2 preamble | REP2 channel estimation | REP2 physical layer header | REP2 payload |
| REP3 | REP3 preamble | REP3 channel estimation | REP3 physical layer header | REP3 payload |
| REP4 | REP4 preamble | REP4 channel estimation | REP4 physical layer header | REP4 payload |

orthogonal in space or frequency alternatively time orthogonal

time

Fig. 2.5

Fig. 2.6

Fig. 2.7

Fig. 2.8

cluster B

end points (EPs)

relaying end points (REPs)

domain master (DM)

cluster A

relaying end points (REPs)

end points (EPs)

beacon specifying CBTXOP allocation

RMAP containing individual allocations for cluster B

global MAP containing complete resource allocation

CBTXOP uses same global resources

global MAP containing complete resource allocation

beacon specifying CBTXOP allocation

RMAP containing individual allocations for cluster A

Fig. 2.9

310

314    315    316    317    318

| preamble | channel estimation | PHY header | HCS | optional fields | PSDU |
|---|---|---|---|---|---|
| SHR | | PHR | | | PHY header |
| 311 | | 312 | | | 313 |

Fig. 3.1

Fig. 3.2

Fig. 3.3

EP 3 669 469 B1

(encoder)

(decoder)

Fig. 3.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007153743 A1
- US 20110217044 A

**Non-patent literature cited in the description**

- Hadamard-Coded Modulation for Visible Light Communications. **NOSHAD MOHAMMAD et al.** IEEE TRANSACTIONS ON COMMUNICATIONS. IEEE SERVICE CENTER, 01 March 2016, vol. 64, 1167-117
- **S. SCHIFFERMULLER** ; **V. JUNGNICKEL.** SPC08-3: Practical Channel Interpolation for OFD-MA. IEEE Globecom, 2006, 1-6
- **T. M. SCHMIDL** ; **D. C. COX**. Robust frequency and timing synchronization for OFDM. *IEEE Transactions on Communications*, 1997
- **H. MINN** ; **V. K. BHARGAVA** ; **K. B. LETAIEF**. A robust timing and frequency synchronization for OFDM systems. *IEEE Transactions on Wireless Communications*, July 2003, vol. 2 (4), 822-839
- **M. SCHELLMANN** ; **V. JUNGNICKEL** ; **C. VON HELMOLT**. On the value of spatial diversity for the synchronization in MIMO-OFDM systems. *IEEE 16th International Symposium on Personal, Indoor and Mobile Radio Communications*, 2005, 201-205
- **K. GOROSHKO** ; **K. MANOLAKIS** ; **L. GROBE** ; **V. JUNGNICKEL**. Low-latency synchronization for OFDM-based visible light communication. *2015 IEEE International Conference on Communication Workshop (ICCW)*, 2015, 1327-1332
- Performance of MIMO Rake receivers in WCDMA systems. **V. JUNGNICKEL** ; **YUN-SHEN CHANG** ; **V. POHL**. IEEE Wireless Communications and Networking Conference. IEEE, 2004, vol. 4, 2075-2080
- **V. JUNGNICKEL** ; **H. CHEN** ; **V. POHL**. A MIMO RAKE receiver with enhanced interference cancellation. *IEEE 61st Vehicular Technology Conference*, 2005, vol. 5, 3137-3141
- **V. JUNGNICKEL** ; **K. MANOLAKIS** ; **L. THIELE** ; **T. WIRTH** ; **T. HAUSTEIN**. Handover Sequences for Interference-Aware Transmission in Multicell MIMO Networks. *Proceedings International ITG Workshop on Smart Antennas - WSA*, 16 February 2009
- **M. NOSHAD** ; **M. BRANDT-PEARCE**. Hadamard-coded modulation for visible light communications. *IEEE Transactions on Communications*, 2016, vol. 64 (3), 1167-1175
- **K. J. HORADAM**. Hadamard Matrices and Their Applications. Princeton University Press, 2006
- Forward error correction in optical Ethernet Communications. **JORDI OLIVERAS BOADA**. Ph.D. Thesis. Universitat Politècnica de Catalunya, June 2014